# EUROPEAN PATENT APPLICATION

(11) **EP 4 498 708 A1**
(43) Date of publication of application: **29.01.2025**
(21) Application number: 23795573.7
(22) Date of filing: 27.04.2023
(51) Int. Cl.: H04W 4/02

(54) **POSITION INFORMATION ACQUISITION METHOD, AND COMMUNICATION APPARATUS AND SYSTEM**

(30) Priority: 29.04.2022 CN 202210475100
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Gill Jennings & Every LLP
(86) International application number: PCT/CN2023/091323
(87) International publication number: WO 2023/208141

(57) **Abstract**

This application provides a method for obtaining location information, a communication apparatus, and a system, and belongs to the communication field, to resolve a problem of inaccurate positioning of a terminal device. The method may be applied to a first location management function network element, a first terminal device, or a second terminal device. The method includes: obtaining location information of the second terminal device, where the location information of the second terminal device is determined based on target location time, and the second terminal device is configured to assist in positioning of the first terminal device; obtaining relative location information between the second terminal device and the first terminal device, where the relative location information is determined based on the target location time; and determining location information of the first terminal device based on the location information of the second terminal device and the relative location information.

## Description

This application claims priority to Chinese Patent Application No. 202210475100.4, filed with the China National Intellectual Property Administration on April 29, 2022 and entitled "METHOD FOR OBTAINING LOCATION INFORMATION, COMMUNICATION APPARATUS, AND SYSTEM", which is incorporated herein by reference in its entirety.

### TECHNICAL FIELD

This application relates to the communication field, and in particular, to a method for obtaining location information, a communication apparatus, and a system.

### BACKGROUND

With the rapid development of mobile communication, positioning of a terminal device is widely applied to scenarios such as internet of vehicles, autonomous driving, smart manufacturing, smart logistics, and uncrewed aerial vehicles. Currently, after performing positioning measurement based on a positioning reference signal (positioning reference signal, PRS) sent by a surrounding cell, a terminal device may send obtained positioning measurement data to a location management function (location management function, LMF) network element, and the LMF network element determines location information of the terminal device based on the positioning measurement data. However, due to mobility of the terminal device, or when the terminal device cannot obtain sufficient PRSs, the location information of the terminal device determined by the LMF network element based on the positioning measurement data is inaccurate.

### SUMMARY

This application provides a method for obtaining location information, a communication apparatus, and a system, to resolve a problem of inaccurate positioning of a terminal device.

To achieve the foregoing objective, this application uses the following technical solutions.

According to a first aspect, a method for obtaining location information is provided. The method may be performed by a communication device, and the communication device may be a first location management function, a first terminal device, or a second terminal device. The method includes: The communication device obtains location information of the second terminal device, where the location information of the second terminal device is determined based on target location time, and the second terminal device is configured to assist in positioning of the first terminal device. The communication device obtains relative location information between the second terminal device and the first terminal device, where the relative location information is determined based on the target location time. The communication device determines location information of the first terminal device based on the location information of the second terminal device and the relative location information.

Based on the method according to the first aspect, the communication device may assist in positioning of the first terminal device through the second terminal device, measure and determine the location information of the second terminal device and the relative location information between the first terminal device and the second terminal device based on the same target location time, to avoid a problem that data used for calculating positioning of the first terminal device is not synchronized, and determine the location information of the first terminal device by using the location information of the second terminal device and the relative location information that are measured simultaneously or at the same time, so that a problem of inaccurate positioning of a terminal device caused by mobility of the terminal device can be resolved, thereby improving positioning accuracy and accuracy of the terminal device.

Further, the method according to the first aspect may further include: obtaining the target location time. Therefore, the communication device may locally configure and obtain the target location time or obtain the target location time from another device, to complete positioning of the first terminal device based on the target location time. This can resolve the problem that data used for calculating positioning of the first terminal device is not synchronized.

In a possible design solution, the method for obtaining location information according to the first aspect is applied to the first location management function network element, and the first location management function network element is configured to serve the first terminal device. The method may further include: sending the target location time to a first gateway mobile location center, where the first gateway mobile location center is configured to serve the second terminal device, and the target location time is used to determine the location information of the second terminal device; or sending the target location time to a first mobility management function network element, where the first mobility management function network element is configured to serve the second terminal device, and the target location time is used to determine the location information of the second terminal device. Therefore, the method is applied to the first location management function network element, that is, the communication device may be the first location management function network element. The first location management function network element may send the target location time to the first gateway mobile location center or the first mobility management function network element that serves the second terminal device, so that the first gateway mobile location center or the first mobility management function network element may send the target location time to the second terminal device, and the second terminal device may perform positioning measurement based on the target location time, to obtain the location information of the second terminal device, so that the first terminal device is positioned, thereby improving positioning accuracy of the first terminal device.

Further, the obtaining the target location time includes: receiving scheduled positioning information from a location server, where the scheduled positioning information may include one or more of the following: scheduled location time, a time interval, or response time; and obtaining the target location time based on the scheduled positioning information. Therefore, the first location management function network element may set the target location time based on the scheduled positioning information, so that the location information of the second terminal device and the relative location information can be obtained through measurement based on the target location time, thereby improving the positioning accuracy of the terminal device.

In another possible design solution, the method for obtaining location information according to the first aspect is applied to the second terminal device. The method further includes: sending the target location time to a second location management function network element, where the second location management function network element is configured to serve the second terminal device, and the target location time is used to determine the location information of the second terminal device. Therefore, the method for obtaining location information according to the first aspect may be applied to the second terminal device. The second terminal device may obtain the target location time, and send the target location time to the second location management function network element, to initiate positioning of the second terminal device, and obtain the location information of the second terminal device.

Further, the obtaining the target location time includes: receiving the target location time from the first terminal device, where the target location time is used to determine the relative location information. Therefore, the first location management function network element or the second terminal device may obtain the target location time from the first terminal device, to position the first terminal device.

In a possible design solution, the method according to the first aspect further includes: sending the target location time to the first terminal device, where the target location time is used to determine the relative location information. Therefore, the first location management function network element or the second terminal device may alternatively send the target location time to the first terminal device for the first terminal device to determine the relative location information.

In another possible design solution, the method for obtaining location information according to the first aspect is applied to the first terminal device. The method further includes: sending the target location time to the second terminal device, where the target location time is used to determine the relative location information. Therefore, the first terminal device may send the target location time to the second terminal device, so that the second terminal device can determine the relative location information and/or the location information of the second terminal device based on the target location time.

According to a second aspect, a method for obtaining location information is provided. The method includes: A first terminal device obtains target location time. The first terminal device obtains relative location information between a second terminal device and the first terminal device based on the target location time, where the second terminal device is configured to assist in positioning of the first terminal device.

In a possible design solution, that the first terminal device obtains the relative location information based on the target location time may include: The first terminal device receives a measurement signal from the second terminal device based on the target location time; and the first terminal device obtains the relative location information between the second terminal device and the first terminal device based on the measurement signal.

Further, that the first terminal device receives the measurement signal from the second terminal device based on the target location time may include: The first terminal device sends a positioning request to the second terminal device at the target location time or before the target location time; and the first terminal device receives the measurement signal from the second terminal device.

In a possible design solution, that the first terminal device obtains the relative location information based on the target location time includes: The first terminal device sends a measurement signal to the second terminal device based on the target location time; and the first terminal device obtains the relative location information between the second terminal device and the first terminal device based on the measurement signal, or the first terminal device receives the relative location information from the second terminal device. The relative location information is determined based on the measurement signal.

Further, that the first terminal device sends the measurement signal to the second terminal device based on the target location time may include: The first terminal device sends the measurement signal to the second terminal device at the target location time or before the target location time.

In a possible design solution, that the first terminal device obtains the target location time may include: The first terminal device receives the target location time from a first location management function network element, where the first location management function network element is configured to serve the first terminal device.

In a possible design solution, the method according to the second aspect may further include: The first terminal device sends the target location time to the second terminal device, where the target location time is used to determine the relative location information.

In a possible design solution, the method according to the second aspect may further include: The first terminal device sends the target location time to the first location management function network element, where the target location time is used to determine the location information of the second terminal device.

In a possible design solution, the method according to the second aspect may further include: The first terminal device receives the location information of the second terminal device from the second terminal device, where the location information of the second terminal device is determined based on the target location time; and the first terminal device determines location information of the first terminal device based on the relative location information and the location information of the second terminal device.

According to a third aspect, a method for obtaining location information is provided. The method includes: A second terminal device obtains target location time; and the second terminal device sends a measurement signal to a first terminal device based on the target location time; or the second terminal device receives a measurement signal from a first terminal device based on the target location time. The second terminal device is configured to assist in positioning of the first terminal device, and the measurement signal is used to determine relative location information between the second terminal device and the first terminal device.

In a possible design solution, that the second terminal device obtains the target location time may include: The second terminal device receives the target location time from the first terminal device.

Further, the method according to the third aspect may further include: The second terminal device sends the target location time to a second location management function network element, where the second location management function network element is configured to serve the second terminal device, and the target location time is used to determine location information of the second terminal device.

In a possible design solution, the method according to the third aspect may further include: The second terminal device obtains the relative location information; the second terminal device receives the location information of the second terminal device from the second location management function network element, where the location information of the second terminal device is determined based on the target location time; the second terminal device determines location information of the first terminal device based on the location information of the second terminal device and the relative location information; and the second terminal device sends the location information of the first terminal device to the first terminal device.

In a possible design solution, the method according to the third aspect may further include: The second terminal device receives the location information of the second terminal device from the second location management function network element, where the location information of the second terminal device is determined based on the target location time; and the second terminal device sends the location information of the second terminal device to the first terminal device, where the location information of the second terminal device is used to determine location information of the first terminal device.

In addition, for technical effects of the method according to the second aspect and the third aspect, refer to the technical effects of the method according to the first aspect. Details are not described herein again.

According to a fourth aspect, a method for obtaining location information is provided. The method may be applied to a first location management function network element, and the first location management function network element is configured to serve a first terminal device. The method includes: obtaining positioning measurement data, where the positioning measurement data includes positioning measurement data between the first terminal device and a mobile relay device, and the positioning measurement data is obtained based on target location time; obtaining location information of the mobile relay device, where the location information of the mobile relay device is determined based on the target location time; and determining location information of the first terminal device based on the positioning measurement data and the location information of the mobile relay device.

Based on the method for obtaining location information provided in the fourth aspect, in a scenario in which a terminal device accesses a mobile relay device, a first location management function network element may also assist in positioning of the first terminal device through the mobile relay device, measure and determine location information of the mobile relay device and positioning measurement data of the first terminal device based on same target location time, and determine location information of the first terminal device by using the location information of the mobile relay device and the positioning measurement data of the first terminal device that are measured simultaneously or at the same time, so that a problem of inaccurate positioning of a terminal device caused by mobility of the terminal device in this scenario can also be resolved, thereby improving positioning accuracy and accuracy of the terminal device.

In a possible design solution, the obtaining positioning measurement data may include: receiving the positioning measurement data between the first terminal device and the mobile relay device from the first terminal device or the mobile relay device. Therefore, the positioning measurement data of the first terminal device includes the positioning measurement data between the first terminal device and the accessed mobile relay device, and the positioning accuracy can be further improved with reference to the location information of the mobile relay device.

Further, the method according to the fourth aspect may further include: obtaining the target location time.

In a possible design solution, the obtaining the target location time may include: receiving scheduled positioning information from a location server, where the scheduled positioning information may include one or more of the following: scheduled location time, a time interval, or response time; and obtaining the target location time based on the scheduled positioning information. Therefore, the first location management function network element may set the target location time based on the scheduled positioning information, so that the location information of the mobile relay device and the positioning measurement data can be obtained through measurement based on the target location time, thereby improving the positioning accuracy of the terminal device.

In a possible design solution, the method according to the fourth aspect may further include: sending the target location time to the first terminal device, where the target location time is used to determine the positioning measurement data. Therefore, the first location management function network element indicates, based on the preset target location time, the first terminal device to perform measurement at the location time, so that synchronization of measurement data can be ensured and the positioning accuracy of the terminal device is improved.

In another possible design solution, the obtaining the target location time may include: receiving the target location time from the first terminal device. Therefore, the target location time may be determined by the first terminal device, so that execution time of the first location management function network element can be reduced, and a positioning rate can be improved.

In a possible design solution, the method according to the fourth aspect may further include: sending the target location time to a second gateway mobile location center, where the second gateway mobile location center is configured to serve the mobile relay device, and the target location time is used to determine the location information of the mobile relay device; or sending the target location time to a second mobility management function network element, where the second mobility management function network element is configured to serve the mobile relay device, and the target location time is used to determine the location information of the mobile relay device. Therefore, the first location management function network element may send the target location time to the second gateway mobile location center or the second mobility management function network element that serves the mobile relay device, so that the target location time may be sent to the mobile relay device, to complete location measurement of the mobile relay device.

According to a fifth aspect, a communication apparatus is provided. The apparatus includes: a processing module. The processing module is configured to obtain location information of a second terminal device, where the location information of the second terminal device is determined based on target location time, and the second terminal device is configured to assist in positioning of a first terminal device. The processing module is further configured to obtain relative location information between the second terminal device and the first terminal device, where the relative location information is determined based on the target location time. The processing module is further configured to determine location information of the first terminal device based on the location information of the second terminal device and the relative location information.

Further, the processing module is further configured to obtain the target location time.

In a possible design solution, the apparatus according to the fifth aspect is used in a first location management function network element, and the first location management function network element is configured to serve the first terminal device. The apparatus further includes: a transceiver module. The transceiver module is configured to send the target location time to a first gateway mobile location center, where the first gateway mobile location center is configured to serve the second terminal device, and the target location time is used to determine the location information of the second terminal device; or the transceiver module is configured to send the target location time to a first mobility management function network element, where the first mobility management function network element is configured to serve the second terminal device, and the target location time is used to determine the location information of the second terminal device.

Further, the transceiver module is configured to receive scheduled positioning information from a location server, where the scheduled positioning information includes one or more of the following: scheduled location time, a time interval, or response time. The processing module is configured to obtain the target location time based on the scheduled positioning information.

In another possible design solution, the apparatus according to the fifth aspect is used in the second terminal device. The apparatus further includes: a transceiver module. The transceiver module is configured to send the target location time to a second location management function network element, where the second location management function network element is configured to serve the second terminal device, and the target location time is used to determine the location information of the second terminal device.

Further, the transceiver module is configured to receive the target location time from the first terminal device, where the target location time is used to determine the relative location information.

In a possible design solution, the transceiver module is configured to send the target location time to the first terminal device, where the target location time is used to determine the relative location information.

In another possible design solution, the apparatus according to the fifth aspect is used in the first terminal device. The apparatus further includes: a transceiver module. The transceiver module is configured to send the target location time to the second terminal device, where the target location time is used to determine the relative location information.

Optionally, the transceiver module may include a receiving module and a sending module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module, and the storage module stores a program or instructions. When the processing module executes the program or the instructions, the communication apparatus according to the fifth aspect can perform the method according to the first aspect.

It should be noted that the communication apparatus according to the fifth aspect may be a terminal device or a network device, may be a chip (system) or another part or component that may be disposed in the terminal device or the network device, or may be an apparatus that includes the terminal device or the network device. This is not limited in this application.

According to a sixth aspect, a communication apparatus is provided. The apparatus includes: a processing module. The processing module is configured to obtain target location time. The processing module is further configured to obtain relative location information between a second terminal device and a first terminal device based on the target location time, where the second terminal device is configured to assist in positioning of the first terminal device.

In a possible design solution, the apparatus according to the sixth aspect further includes: a transceiver module. The transceiver module is configured to receive a measurement signal from the second terminal device based on the target location time. The transceiver module is further configured to obtain the relative location information between the second terminal device and the first terminal device based on the measurement signal.

Further, the transceiver module is configured to send a positioning request to the second terminal device at the target location time or before the target location time. The transceiver module is further configured to receive the measurement signal from the second terminal device.

In a possible design solution, the transceiver module is configured to send a measurement signal to the second terminal device based on the target location time. The processing module is configured to obtain the relative location information between the second terminal device and the first terminal device based on the measurement signal. Alternatively, the transceiver module is configured to receive the relative location information from the second terminal device. The relative location information is determined based on the measurement signal.

Further, the transceiver module is configured to send the measurement signal to the second terminal device at the target location time or before the target location time.

In a possible design solution, the transceiver module is configured to receive the target location time from a first location management function network element, where the first location management function network element is configured to serve the first terminal device.

In a possible design solution, the transceiver module is configured to send the target location time to the second terminal device, where the target location time is used to determine the relative location information.

In a possible design solution, the transceiver module is configured to send the target location time to the first location management function network element, where the target location time is used to determine location information of the second terminal device.

In a possible design solution, the transceiver module is configured to receive the location information of the second terminal device from the second terminal device, where the location information of the second terminal device is determined based on the target location time. The processing module is configured to determine location information of the first terminal device based on the relative location information and the location information of the second terminal device.

Optionally, the transceiver module may include a receiving module and a sending module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module, and the storage module stores a program or instructions. When the processing module executes the program or the instructions, the communication apparatus according to the sixth aspect can perform the method according to the second aspect.

It should be noted that, the communication apparatus according to the sixth aspect may be a terminal device, may be a chip (system) or another part or component that may be disposed in the terminal device, or may be an apparatus including the terminal device. This is not limited in this application.

According to a seventh aspect, a communication apparatus is provided. The apparatus includes: a processing module and a transceiver module. The processing module is configured to obtain target location time. The transceiver module is configured to send a measurement signal to a first terminal device based on the target location time; or the transceiver module is configured to receive a measurement signal from a first terminal device based on the target location time. A second terminal device is configured to assist in positioning of the first terminal device, and the measurement signal is used to determine relative location information between the second terminal device and the first terminal device.

In a possible design solution, the transceiver module is further configured to receive the target location time from the first terminal device.

Further, the transceiver module is configured to send the target location time to a second location management function network element, where the second location management function network element is configured to serve the second terminal device, and the target location time is used to determine location information of the second terminal device.

In a possible design solution, the processing module is configured to obtain the relative location information. The transceiver module is configured to receive the location information of the second terminal device from the second location management function network element, where the location information of the second terminal device is determined based on the target location time. The processing module is configured to determine location information of the first terminal device based on the location information of the second terminal device and the relative location information. The transceiver module is configured to send the location information of the first terminal device to the first terminal device.

In a possible design solution, the transceiver module is configured to receive the location information of the second terminal device from the second location management function network element, where the location information of the second terminal device is determined based on the target location time. The transceiver module is configured to send the location information of the second terminal device to the first terminal device, where the location information of the second terminal device is used to determine location information of the first terminal device.

Optionally, the transceiver module may include a receiving module and a sending module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module, and the storage module stores a program or instructions. When the processing module executes the program or the instructions, the communication apparatus according to the seventh aspect can perform the method according to the third aspect.

It should be noted that, the communication apparatus according to the seventh aspect may be a terminal device, may be a chip (system) or another part or component that may be disposed in the terminal device, or may be an apparatus including the terminal device. This is not limited in this application.

In addition, for technical effects of the communication apparatus according to the fifth aspect and the seventh aspect, refer to the technical effects of the method according to the first aspect. Details are not described herein again.

According to an eighth aspect, a communication apparatus is provided. The apparatus is used in a first location management function network element, and the first location management function network element is configured to serve a first terminal device. The apparatus includes: a processing module. The processing module is configured to obtain positioning measurement data, where the positioning measurement data includes positioning measurement data between the first terminal device and a mobile relay device, and the positioning measurement data is obtained based on target location time. The processing module is configured to obtain location information of the mobile relay device, where the location information of the mobile relay device is determined based on the target location time. The processing module is configured to determine location information of the first terminal device based on the positioning measurement data and the location information of the mobile relay device.

In a possible design solution, the apparatus according to the eighth aspect further includes: a transceiver module. The transceiver module is configured to receive the positioning measurement data between the first terminal device and the mobile relay device from the first terminal device or the mobile relay device.

Further, the processing module is configured to obtain the target location time.

In a possible design solution, the apparatus according to the eighth aspect further includes: a transceiver module.

The transceiver module is configured to receive scheduled positioning information from a location server, where the scheduled positioning information includes one or more of the following: scheduled location time, a time interval, or response time.

The processing module is configured to obtain the target location time based on the scheduled positioning information.

In a possible design solution, the transceiver module is configured to send the target location time to the first terminal device, where the target location time is used to determine the positioning measurement data.

In another possible design solution, the apparatus according to the eighth aspect further includes: a transceiver module. The transceiver module is configured to receive the target location time from the first terminal device.

In a possible design solution, the transceiver module is configured to send the target location time to a second gateway mobile location center, where the second gateway mobile location center is configured to serve the mobile relay device, and the target location time is used to determine the location information of the mobile relay device; or the transceiver module is configured to send the target location time to a second mobility management function network element, where the second mobility management function network element is configured to serve the mobile relay device, and the target location time is used to determine the location information of the mobile relay device.

Optionally, the transceiver module may include a receiving module and a sending module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module, and the storage module stores a program or instructions. When the processing module executes the program or the instructions, the communication apparatus according to the eighth aspect can perform the method according to the fourth aspect.

It should be noted that, the communication apparatus according to the eighth aspect may be a network device, may be a chip (system) or another part or component that may be disposed in the network device, or may be an apparatus including the network device. This is not limited in this application.

In addition, for technical effects of the communication apparatus according to the eighth aspect, refer to the technical effects of the method according to the fourth aspect. Details are not described herein again.

According to a ninth aspect, a communication apparatus is provided. The communication apparatus includes: a processor and a memory. The memory is configured to store computer instructions. When the processor executes the instructions, the communication apparatus is enabled to perform the method according to any one of the first aspect to the fourth aspect.

In a possible design solution, the communication apparatus according to the ninth aspect may further include a transceiver. The transceiver may be used by the communication apparatus according to the ninth aspect to communicate with another communication apparatus.

In this application, the communication apparatus according to the ninth aspect may be the first location management function network element, the first terminal device, or the second terminal device in the first aspect to the fourth aspect, may be a chip (system) or another part or component that may be disposed in the first location management function network element, the first terminal device, or the second terminal device, or an apparatus including the first location management function network element, the first terminal device, or the second terminal device.

According to a tenth aspect, a communication system is provided. The communication system includes a first location management function network element and a second location management function network element. Optionally, the communication system further includes: a first terminal device and a second terminal device.

According to an eleventh aspect, a computer-readable storage medium is provided, including a computer program or instructions. When the computer program or the instructions are run on a computer, the computer is enabled to perform the method according to any one of the first aspect and the fourth aspect.

According to a twelfth aspect, a computer program product is provided, including a computer program or instructions. When the computer program or the instructions are run on a computer, the computer is enabled to perform the method according to any one of the first aspect and the fourth aspect.

According to a thirteenth aspect, an embodiment of this application provides a computer program product. The computer program product includes a computer program or instructions, and when the computer program or the instructions are run on a computer, the computer is enabled to perform the method according to any one of the first aspect to the fourth aspect.

### BRIEF DESCRIPTION OF DRAWINGS

FIG. 1 is a diagram 1 of an architecture of a communication system according to an embodiment of this application;
FIG. 2 is a diagram 2 of an architecture of a communication system according to an embodiment of this application;
FIG. 3 is a diagram 3 of an architecture of a communication system according to an embodiment of this application;
FIG. 4A to FIG. 4C are a schematic flowchart 1 of a method for obtaining location information according to an embodiment of this application;
FIG. 5 is a diagram of a structure of measuring a relative distance between a UE 1 and a UE 2 according to an embodiment of this application;
FIG. 6 is a diagram of a structure of measuring a relative angle between a UE 1 and a UE 2 according to an embodiment of this application;
FIG. 7 is a schematic flowchart 2 of a method for obtaining location information according to an embodiment of this application;
FIG. 8 is a schematic flowchart 3 of a method for obtaining location information according to an embodiment of this application;
FIG. 9 is a schematic flowchart 4 of a method for obtaining location information according to an embodiment of this application;
FIG. 10 is a schematic flowchart 5 of a method for obtaining location information according to an embodiment of this application;
FIG. 11 is a schematic flowchart 6 of a method for obtaining location information according to an embodiment of this application;
FIG. 12 is a schematic flowchart 7 of a method for obtaining location information according to an embodiment of this application;
FIG. 13 is a schematic flowchart 8 of a method for obtaining location information according to an embodiment of this application;
FIG. 14 is a diagram 1 of a structure of a communication apparatus according to an embodiment of this application; and
FIG. 15 is a diagram 2 of a structure of a communication apparatus according to an embodiment of this application.

### DESCRIPTION OF EMBODIMENTS

For ease of understanding, the following first describes related technologies.

Currently, there are two positioning manners of a terminal device. One manner is that the terminal device performs positioning measurement based on a PRS sent by a surrounding cell, and then sends obtained positioning measurement data to an LMF network element. The LMF network element receives the positioning measurement data from the terminal device, and determines location information of the terminal device based on the positioning measurement data. However, due to mobility of the terminal device, in this manner, when the terminal device falls beyond coverage of a network or cannot obtain sufficient PRSs, the positioning measurement data obtained by the terminal device is inaccurate. Consequently, the location information of the terminal device determined by the LMF network element based on the positioning measurement data is inaccurate. The positioning manner in which positioning measurement is performed through a Uu interface may be referred to as Uu positioning.

The other manner is that a terminal device having a sidelink (sidelink) positioning capability determines a relative distance or a relative angle between terminal devices through ranging or angle measurement, so that relative positioning of the terminal devices can be implemented. However, location information obtained in this manner is a relative location of the terminal device, that is, the obtained location information of the terminal device is also inaccurate. The manner in which positioning measurement is performed through a sidelink may be referred to as sidelink positioning.

Therefore, to resolve a problem of inaccurate positioning of the terminal device, embodiments of this application provide a method for obtaining location information. Positioning measurement may be performed on a to-be-positioned terminal device based on scheduled location time and in combination with another terminal device, positioning measurement between the terminal device and a surrounding cell (for example, a base station or an access network device) and positioning measurement between terminal devices are completed at the same time, and a location of the to-be-positioned terminal device is calculated based on positioning measurement data between the terminal device and the surrounding cell and positioning measurement data between the terminal devices that are obtained at the same time, so that positioning accuracy of the terminal device can be improved, thereby obtaining more accurate location information of the terminal device.

The following describes the technical solutions in embodiments of this application with reference to the accompanying drawings in embodiments of this application.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

Aspects, embodiments, or features are presented in this application by describing a system that may include a plurality of devices, components, modules, and the like. It should be appreciated and understood that, each system may include another device, component, or module, and the like, and/or may not include all devices, components, or modules, and the like discussed with reference to the accompanying drawings. In addition, a combination of these solutions may be further used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "relevant (corresponding, relevant)", and "corresponding (corresponding)" may sometimes be interchangeably used. It should be noted that meanings expressed by the terms are consistent when differences of the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding of embodiments of this application, a communication system provided in embodiments of this application is first provided.

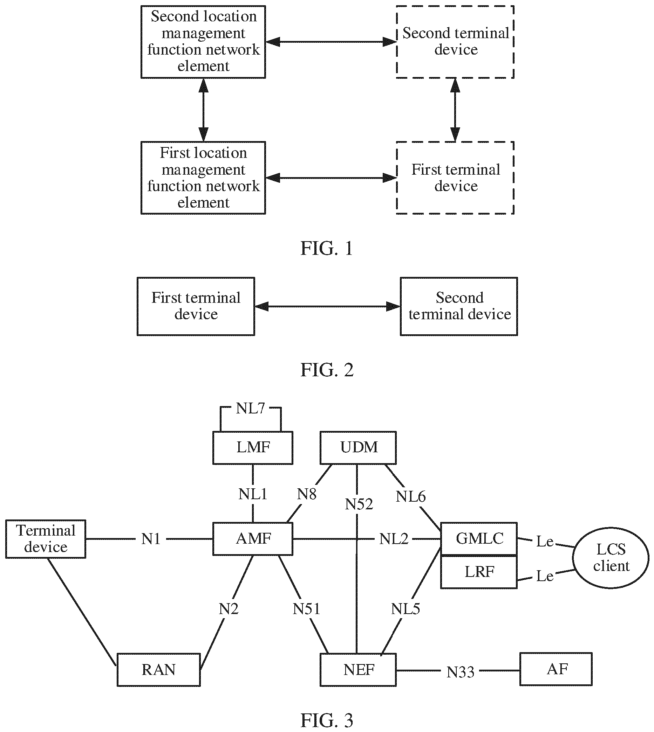

For example, FIG. 1 is a diagram of an architecture of a communication system according to an embodiment of this application.

As shown in FIG. 1, the communication system includes: a first location management function network element and a second location management function network element. The first location management function network element and the second location management function network element may directly communicate with each other, or may communicate with each other through forwarding by another device. This is not specifically limited in embodiments of this application.

Optionally, as shown in FIG. 1, the communication system may further include a first terminal device and a second terminal device. The first location management function network element is configured to serve the first terminal device, and may manage and control a location service request of the first terminal device. The second location management function network element is configured to serve the second terminal device, and may manage and control a location service request of the second terminal device. In this embodiment of this application, an example in which the first terminal device is used as a target positioned device, and the second terminal device is used as a device that assists in positioning of the first terminal device is used for description. The first terminal device may also be referred to as a target terminal device, and the second terminal device may also be referred to as an assistant terminal device. This is not specifically limited in embodiments of this application.

Although not shown, the communication system may further include another network element or device such as a mobility management function network element. This is not specifically limited in embodiments of this application.

In a possible implementation, after determining location information of the second terminal device based on target location time, the second location management function network element sends the location information of the second terminal device to the first location management function network element. The first location management function network element receives the location information of the second terminal device from the second location management function network element; and the first location management function network element may obtain relative location information between the second terminal device and the first terminal device. The relative location information is determined based on the target location time. Further, the first location management function network element may determine location information of the first terminal device based on the location information of the second terminal device and the relative location information. A specific implementation process of the solution is described in subsequent method embodiments. Details are not described herein.

In another possible implementation, after determining location information of the second terminal device based on target location time, the second location management function network element sends the location information of the second terminal device to the first location management function network element. The first location management function network element receives the location information of the second terminal device from the second location management function network element, and sends the location information of the second terminal device to the first terminal device. Further, optionally, the first terminal device receives the location information of the second terminal device; and the first terminal device may obtain relative location information between the second terminal device and the first terminal device. The relative location information is determined based on the target location time. Further, the first terminal device may determine location information of the first terminal device based on the location information of the second terminal device and the relative location information. A specific implementation process and technical effects of the solution are described in subsequent method embodiments. Details are not described herein.

Optionally, the first location management function network element or the second location management function network element may be an LMF network element, a location management component (location management component, LMC) network element, a local location management function (local location management function, LLMF) network element located in a network device, or the like. This is not specifically limited in embodiments of this application.

Optionally, the first location management function network element and the second location management function network element in this embodiment of this application may alternatively be a same location management function network element. In other words, in this embodiment of this application, location management function network elements that serve the first terminal device and the second terminal device may be a same location management function network element. This is not specifically limited in embodiments of this application.

For example, FIG. 2 shows another communication system according to an embodiment of this application. The communication system includes: a first terminal device and a second terminal device. The first terminal device and the second terminal device may directly communicate with each other, or may communicate with each other through forwarding by another device. This is not specifically limited in embodiments of this application.

In a possible implementation, after receiving location information of the second terminal device, the second terminal device sends the location information of the second terminal device to the first terminal device. The location information of the second terminal device is determined based on target location time. The first terminal device receives the location information of the second terminal device; and the first terminal device may obtain relative location information between the second terminal device and the first terminal device. The relative location information is determined based on the target location time. Further, the first terminal device may determine location information of the first terminal device based on the location information of the second terminal device and the relative location information. A specific implementation process and technical effects of the solution are described in subsequent method embodiments. Details are not described herein.

In another possible implementation, the second terminal device receives location information of the second terminal device; and the second terminal device obtains relative location information between the second terminal device and the first terminal device. Both the location information of the second terminal device and the relative location information between the second terminal device and the first terminal device are determined based on target location time. Further, the second terminal device may determine location information of the first terminal device based on the location information of the second terminal device and the relative location information. A specific implementation process and technical effects of the solution are described in subsequent method embodiments. Details are not described herein.

It should be noted that the communication system provided in this embodiment of this application is applicable to various communication systems. A 5G mobile communication system is used as an example. A network element or an entity corresponding to the mobility management function network element may be an access and mobility management function (access and mobility management function, AMF) network element in the 5G mobile communication system, and the first location management function network element or the second location management function network element may be an LMF network element in the 5G mobile communication system. This is not specifically limited in embodiments of this application.

First, functional entities of a core network device in embodiments of this application are first described. The functional entities of the core network device may include an access management network element, a location management network element, a data management network element, a network exposure network element, an application network element, a gateway location network element, and a location retrieval network element. The following describes a function of each functional entity.

The access management network element is configured to implement access management and mobility management of a terminal device. For example, the access management network element is responsible for status maintenance of the terminal device, reachability management of the terminal device, forwarding of a non-mobility management (mobility management, MM) non-access stratum (non-access stratum, NAS) message, and forwarding of a session management (session management, SM) N2 message. The access management network element may be an access and mobility management function (access and mobility management function, AMF) network element in a 5G communication system.

The location management network element is mainly configured to manage and control a location service request of the terminal device. For example, positioning-related assistance information may be delivered to the terminal device according to an LPP positioning protocol (LTE positioning protocol, LPP). The location management network element may be an LMF network element in the 5G communication system.

The data management network element is configured to implement user subscription context management, for example, store subscription information of the terminal device. The data management network element may be referred to as a unified data management (unified data management, UDM) network element in the 5G communication system.

The network exposure network element exposes a network function to a third party through a northbound API interface. The network exposure network element may be a network exposure function (network exposure function, NEF) network element in the 5G communication system.

The application network element may be an application control platform of a third party, or may be a device of an operator. The application network element is configured to implement application management, and may provide services for a plurality of application servers. The application network element may be an application function (application function, AF) network element in the 5G communication system.

The gateway location network element is configured to provide access and management for a mobile location service or a client of a mobile terminal. The gateway location network element may be a gateway mobile location center (Gateway Mobile Location Center, GMLC) network element in the 5G communication system.

The location retrieval network element is mainly configured to retrieve or verify location information. The location retrieval network element may be a location retrieval function (location retrieval function, LRF) network element in the 5G communication system.

It should be noted that, that the AMF, the UDM, and the like are referred to as network elements in embodiments of this application is merely an example. Actually, the network elements may be network elements implemented on dedicated hardware, may be software instances run on dedicated hardware, may be instances that implement a virtualization function on an appropriate platform. For example, the virtualization platform may be a cloud platform. In a future communication system, the foregoing network elements may have other names. This is not limited in this application.

For example, FIG. 3 is a diagram of an application architecture of a method for obtaining location information in a 5G mobile communication system according to an embodiment of this application. The communication system includes a terminal device, an access network (access network, AN), and a core network (core network, CN).

The AN is configured to implement an access-related function, may provide a network access function for an authorized user in a specific area, and can determine transmission links with different quality based on a user level, a service requirement, and the like, to perform transmission of user data. The AN forwards a control signal and user data between the terminal and the CN. The AN may include an access network device, and may also be referred to as a radio access network (radio access network, RAN) device. The CN is mainly responsible for maintaining subscription data of a mobile network, and provides functions such as session management, mobility management, policy management, and security authentication for the terminal. The CN mainly includes the following network elements: an LMF network element, an AMF network element, a UDM network element, a GMLC network element, an NEF network element, and an AF network element.

As shown in FIG. 3, the terminal device accesses a 5G network through the RAN device. The terminal device communicates with the AMF network element through an N1 interface (N1 for short), the RAN device communicates with the AMF network element through an N2 interface (N2 for short), the AMF network element communicates with the LMF network element through an NL1 interface (NL1 for short), the AMF network element communicates with the GMLC network element through an NL2 interface (NL2 for short), the AMF network element communicates with the NEF network element through an N51 interface (N51 for short), the AMF network element communicates with the UDM network element through an N8 interface (N8 for short), LMF network elements communicate with each other through an NL7 interface (NL7 for short), the UDM network element communicates with the NEF network element through an N52 interface (N52 for short), the UDM network element communicates with the GMLC network element through an NL6 interface (NL6 for short), the NEF network element communicates with the GMLC network element through an NL5 interface (NL5 for short), the NEF network element communicates with the AF network element through an N33 interface (N33 for short), the GMLC network element communicates with a location service (location service, LCS) client (Client) /server (referred to as a location server for short) through an Le interface (Le for short), and the LRF network element communicates with the LCS client through the Le interface.

The RAN device may be a device that provides access for the terminal device. For example, the RAN device may include a next-generation mobile communication system, for example, a 6G access network device such as a 6G base station. Alternatively, in the next-generation mobile communication system, the network device may alternatively be named in another manner, which falls within the protection scope of embodiments of this application. This is not limited in this application. Alternatively, the RAN device may alternatively include a gNB in a 5G system, for example, an NR system, or one antenna panel or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF), for example, a baseband unit (building baseband unit, BBU), a central unit (central unit, CU), a distributed unit (distributed unit, DU), an RSU having a base station function, a wired access gateway, or a 5G core network element. Alternatively, the RAN device may alternatively include an access point (access point, AP) in a Wi-Fi system, a wireless relay node, a wireless backhaul node, or various forms of macro base stations, micro base stations (also referred to as small cells), relay stations, access points, wearable devices, vehicle-mounted devices, or the like.

The terminal device in embodiments of this application may be a terminal having a transceiver function, or a chip or a chip system that may be disposed in the terminal. The terminal may also be referred to as a user equipment (user equipment, UE), a user device, an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a roadside unit (roadside unit, RSU) having a terminal function, or the like. Alternatively, the terminal in this application may be an in-vehicle module, an in-vehicle subassembly, an in-vehicle part, an in-vehicle chip, or an in-vehicle unit that is built in a vehicle as one or more parts or units.

The AMF network element is mainly configured for mobility management in the mobile network, for example, user location update, registration of a user with a network, and user handover.

The LMF network element is mainly configured to manage and control a location service request of the terminal device. For example, the LMF network element may deliver positioning-related assistance information to the terminal device according to an LPP positioning protocol (LTE positioning protocol, LPP). An NR positioning protocol A (NR positioning protocol A, NRPPa) is used to control the positioning measurement between the LMF network element and the RAN .

The UDM network element is mainly configured to store user data, for example, subscription data and authentication/authorization data.

The NEF network element is mainly configured to support capability and event exposure.

The GMLC network element is mainly configured to provide access and management for a mobile location service or a client of a mobile terminal. For example, after performing registration or authentication on a request initiated by the LCS client, the GMLC forwards the request to an AMF network element that currently serves a mobile user.

The LRF network element is mainly configured to retrieve or verify location information.

The AF mainly supports interaction with the CN to provide a service, for example, affecting data routing decision-making and a policy control function, or providing some third-party services for a network side.

The LCS client is a functional entity that interacts with a network element related to an entire location service system LCS to obtain location information of a mobile terminal device. The LCS client may be an application entity in a mobile network or may be located outside the mobile network and accesses the mobile location service system through a network. Generally, the LCS client is a location application provided by a mobile operator or a third party.

It should be understood that devices or functional nodes included in the communication systems shown in FIG. 1 to FIG. 3 are merely described as examples, and do not constitute a limitation on embodiments of this application. Actually, the communication systems in FIG. 1 to FIG. 3 may further include another network element, device, or functional node that has an interaction relationship with the device or the functional node shown in the figures. This is not specifically limited herein.

For ease of understanding, the following specifically describes an interaction procedure between the network elements in the foregoing system by using method embodiments. The method for obtaining location information provided in embodiments of this application is applicable to the foregoing communication system. In different scenarios, different devices/network elements in the communication system may perform different procedures of the method for obtaining location information. Details are provided below.

For example, the communication system provided in embodiments of this application is used in a 5G mobile communication system, the first terminal device is a UE 1, the first location management function network element is an LMF 1, a mobility management function network element that serves the first terminal device is an AMF 1, a gateway mobile location center that serves the first terminal device is a GMLC 1, the second terminal device is a UE 2, the second location management function network element is an LMF 2, a mobility management function network element that serves the first terminal device is an AMF 2, and a gateway mobile location center that serves the second terminal device is a GMLC 2.

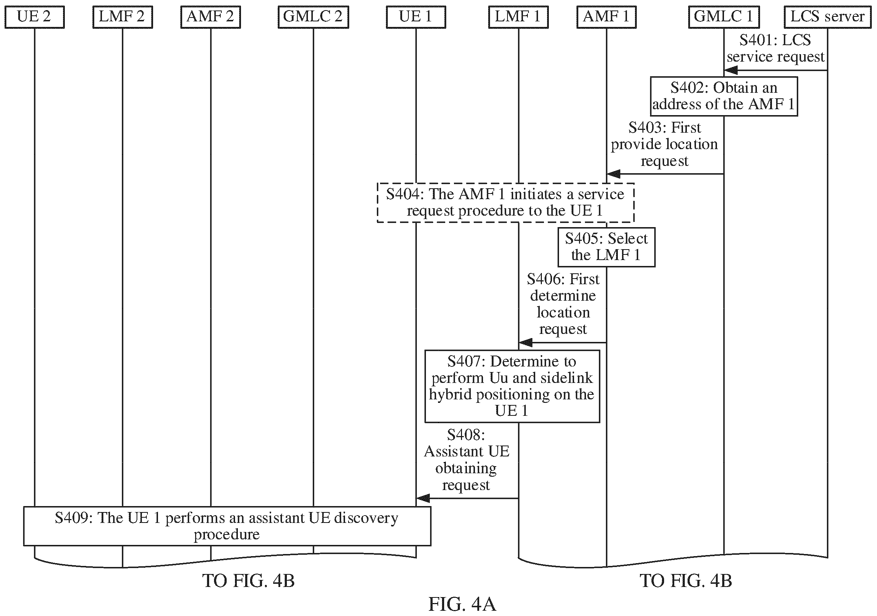

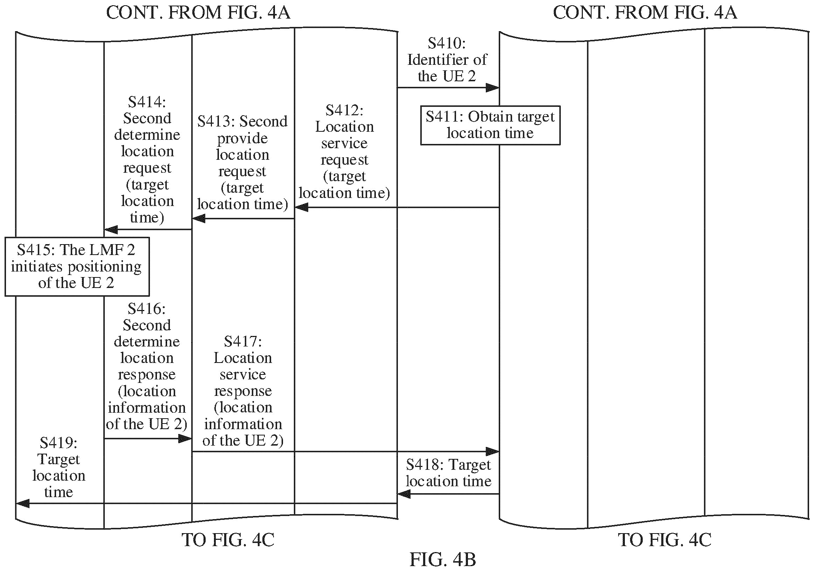

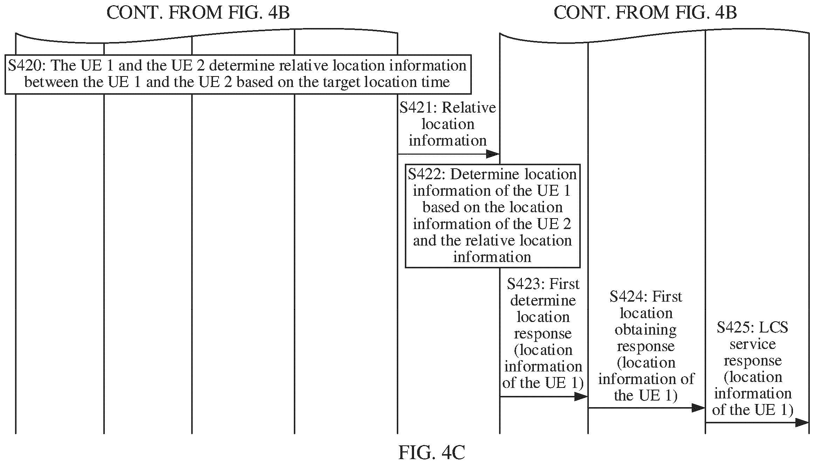

FIG. 4A to FIG. 4C are a schematic flowchart 1 of a method for obtaining location information according to an embodiment of this application. In the method for obtaining location information, the LCS client shown in FIG. 3 may initiate positioning of a UE 1, and an LMF 1 determines location information of the UE 1.

As shown in FIG. 4A to FIG. 4C, the method for obtaining location information includes the following steps.

S401: The LCS client sends an LCS service request to a GMLC 1. Correspondingly, the GMLC 1 receives the LCS service request from the LCS client.

The LCS service request (LCS service Request) is used to request to obtain a location of the UE 1. The LCS service request may carry an identifier of the LCS client and an identifier of the UE 1. The identifier of the UE 1 may be a generic public subscription identifier (generic public subscription identifier, GPSI), or may be a subscription permanent identifier (subscription permanent identifier, SUPI).

Optionally, the LCS service request may further carry LCS quality of service (quality of service, QoS) information and scheduled positioning information. The LCS QoS may be positioning accuracy (accuracy) of the UE 1, and represents a requirement for precision or accuracy of positioning the UE 1. The scheduled positioning information may include one or more of scheduled location time (scheduled location time), a time interval (time interval), or response time (Response time). The scheduled location time may indicate a moment at which positioning measurement is performed on the UE 1 or time at which the location of the UE 1 is obtained. The time interval may indicate a time interval at which positioning measurement is performed on the UE 1 or a time interval at which the location of the UE1 is obtained. The response time may indicate time for replying to positioning information of the UE 1.

For ease of description, in embodiments of this application, Ts represents the scheduled location time, ΔT represents the time interval, T_{R} represents the response time, and T_{D} represents the following target location time.

S402: The GMLC 1 obtains an address of an AMF 1.

For example, after receiving the LCS service request, the GMLC 1 may request, from a UDM based on the identifier of the UE 1, to obtain an address of an AMF that currently serves the UE 1, that is, the address of the AMF 1, so that the GMLC 1 may perform a subsequent positioning procedure based on the address of the AMF 1.

It should be noted that the GMLC 1 may further obtain an LCS privacy profile (LCS privacy profile) from the UDM. The GMLC 1 may determine, based on the LCS privacy profile, whether the LCS client that initiates the LCS service request is authorized to obtain the location of the UE 1. For example, if the GMLC 1 determines that the LCS client is authorized, the GMLC 1 may accept the LCS service request and perform a subsequent procedure. For another example, if the GMLC 1 determines that the LCS client is not authorized, the GMLC 1 may reject the LCS service request and does not accept obtaining of the location of the UE 1 by the LCS client.

S403: The GMLC 1 sends a first provide location request to the AMF 1. Correspondingly, the AMF 1 receives the first provide location request from the GMLC 1.

For example, the GMLC 1 may send the first provide location request (Namf_Location_ProvidePositioningInfo_ Request) to the AMF 1 based on the address of the AMF 1 obtained in step S402. The first provide location request is used to request the AMF 1 to provide location information of the UE 1. The first provide location request may carry the identifier of the UE1.

Optionally, the first provide location request may further carry the positioning accuracy (accuracy) of the UE 1 and the scheduled positioning information.

S404: The AMF 1 initiates a service request procedure to the UE 1.

If the UE 1 is in an idle state, the AMF 1 initiates the service request procedure to complete a signaling connection with the UE 1. For a specific connection establishment procedure, refer to an existing implementation. Details are not described herein.

It may be understood that S404 is an optional step. For example, when the UE 1 is in a connected state, S404 may not be performed.

S405: The AMF 1 selects an LMF 1.

For example, the AMF 1 may select, based on the identifier of the UE 1, the LMF 1 that serves the UE 1, to complete calculation of the location of the UE 1.

S406: The AMF 1 sends a first determine location request to the LMF 1. Correspondingly, the LMF 1 receives the first determine location request from the AMF 1.

The first determine location request (Nlmf_Location_DetermineLocation) is used to request the LMF 1 to determine the location information of the UE 1. The first determine location request may carry the identifier of the UE 1.

Optionally, the first determine location request may further carry the positioning accuracy (accuracy) of the UE 1 and the scheduled positioning information.

S407: The LMF 1 determines to perform Uu and sidelink hybrid positioning on the UE 1.

It should be noted that a manner of positioning the UE 1 may include Uu positioning, sidelink positioning, and Uu and sidelink hybrid positioning. The Uu and sidelink hybrid positioning indicates that positioning of the UE 1 is implemented based on a combination of two positioning manners: the Uu positioning and the sidelink positioning. For a Uu and sidelink hybrid positioning process, refer to a subsequent positioning process, for example, the following S408 to S422.

In a possible design solution, the LMF 1 may initiate positioning of the UE 1, and determine a positioning manner based on positioning measurement data obtained from the UE 1. For example, the UE 1 may perform positioning measurement based on a PRS sent by a surrounding cell, and send the obtained positioning measurement data of the UE 1 to the LMF 1, and the LMF 1 performs calculation based on the received positioning measurement data of the UE 1, to obtain the location information of the UE 1. If the location information of the UE 1 obtained through calculation by the LMF 1 does not meet the LCS QoS (for example, the positioning accuracy of the UE 1), or if the location information of the UE 1 obtained through calculation is inaccurate because a quantity of measured cells is insufficient, the LMF 1 may perform Uu and sidelink hybrid positioning on the UE 1.

The positioning measurement data of the UE 1 may include a cell identifier (for example, a cell global identifier, cell global identifier), a downlink reference signal received power of each cell, radio wave or PRS transmission time between the UE 1 and each cell, a difference of signal round-trip time between the UE 1 and base stations of all cells, and the like.

In another possible design solution, the LMF 1 may determine a positioning manner based on subscription information and/or capability information of the UE 1. The subscription information of the UE 1 may indicate whether the sidelink positioning and/or the Uu positioning are/is allowed for the UE 1, and the capability information may indicate whether the UE 1 supports the sidelink positioning and/or the Uu positioning. For example, if the sidelink positioning and the Uu positioning are allowed for the UE 1, and the UE 1 supports the sidelink positioning and the Uu positioning, the LMF 1 may perform Uu and sidelink hybrid positioning on the UE 1. For another example, if the sidelink positioning and the Uu positioning are allowed for the UE 1, the LMF 1 may perform Uu and sidelink hybrid positioning on the UE 1. For still another example, if the UE 1 supports the sidelink positioning and the Uu positioning, the LMF 1 may perform Uu and sidelink hybrid positioning on the UE 1.

S408: The LMF 1 sends an assistant UE obtaining request to the UE 1. Correspondingly, the UE 1 receives the assistant UE obtaining request from the LMF 1.

The assistant UE obtaining request may carry the positioning manner (for example, the Uu and sidelink hybrid positioning manner). The UE 1 may determine an assistant UE based on the determined positioning manner. The assistant UE may be configured to assist in positioning of the UE 1.

In a possible design solution, S408 may be replaced with the following: The LMF 1 notifies the UE 1 to use the Uu and sidelink hybrid positioning manner.

S409: The UE 1 performs an assistant UE discovery procedure.

For example, after receiving the assistant UE obtaining request or receiving the positioning manner notification, the UE 1 may determine the assistant UE based on the determined positioning manner. The assistant UE may be configured to assist in positioning of the UE 1, and the determined assistant UE is a UE 2.

S410: The UE 1 sends an identifier of the UE 2 to the LMF 1. Correspondingly, the LMF 1 receives the identifier of the UE 2 from the UE 1.

For example, the identifier of the UE 2 may be carried in an assistant UE obtaining response or a notification response corresponding to S408. The identifier of the UE 2 may be a GPSI, or may be a subscription concealed identifier (subscription concealed identifier, SUCI).

S411: The LMF 1 obtains target location time.

The target location time is used to determine location information of the UE 2 and relative location information between the UE 1 and the UE 2. The target location time may be one or more time points used for positioning measurement, or may be one or more time periods including a time point and a time interval.

In a possible design solution, if the first determine location request received by the LMF 1 in S406 carries the scheduled positioning information, the LMF 1 may determine the target location time based on the scheduled positioning information.

For example, the scheduled positioning information may include the scheduled location time T_{S}. The LMF 1 may determine the scheduled location time Ts as the target location time. In this case, the target location time may be a time point, that is, T_{D}=T_{S}.

For another example, the scheduled positioning information may include the scheduled location time Ts and the time interval ΔT. The LMF 1 may determine the target location time based on the scheduled location time T_{S} and the time interval ΔT. For example, T_{D}=T_{S}+n•ΔT, where n is greater than or equal to 1. In this case, the target location time may be represented as one or more time periods including one time point and one or more time intervals. The time point may indicate start time of measurement, and the time interval may indicate a measurement cycle.

For another example, the scheduled positioning information may include the response time T_{R}. The LMF 1 may set the target location time to one time point or one or more time periods before the response time.

For still another example, the scheduled positioning information may include the scheduled location time T_{S}, the time interval ΔT, and the response time T_{R}. The LMF 1 may set the target location time to T_{D}=T_{S}+n•ΔT, and duration of the T_{D} is less than duration of T_{R}. In this case, n may be equal to 0. When n is equal to 0, T_{D}=T_{S}. In other words, the target location time may be one time point or one or more time periods before the response time.

It can be learned from above that the target location time may be the same as the scheduled location time, or may be different from the scheduled location time.

In another possible design solution, if the first determine location request received by the LMF 1 in S406 does not carry the scheduled positioning information, the LMF 1 may locally configure the target location time. A type of the target location time is similar to that of the target location time determined in the foregoing design solution. In other words, the target location time that may be locally configured by the LMF 1 may also be a time point or a time period.

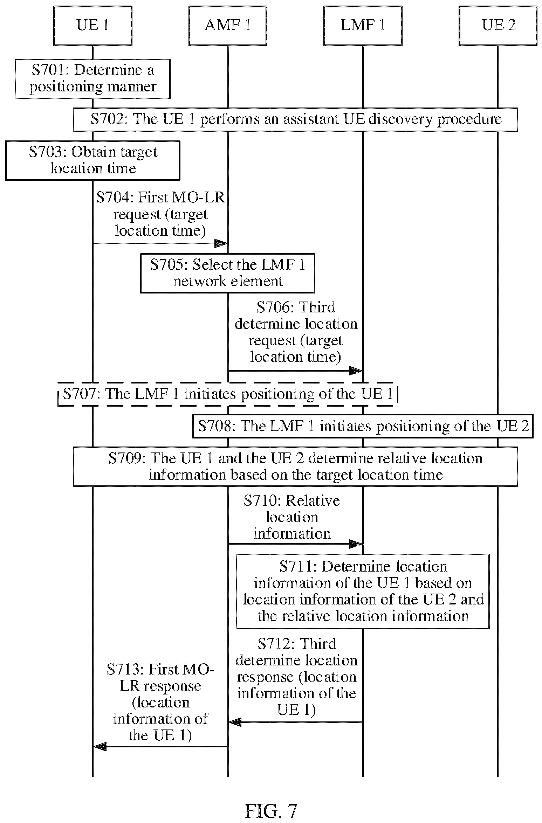

In still another possible design solution, the LMF 1 may receive the target location time from the UE 1. The target location time may also be one time point or one or more time periods, and a type of the target location time is similar to that of the determined target location time. The target location time may be scheduled location time (scheduled location time). If the target location time is obtained from the UE 1, the following S418 may not be performed. For a specific process in which the UE 1 obtains the target location time, refer to the following method embodiment shown in FIG. 7 below. Details are not described herein.

Optionally, if the first determine location request received by the LMF 1 in S406 carries the positioning accuracy (accuracy) of the UE 1, the LMF 1 may determine positioning accuracy of the UE 2 and sidelink positioning accuracy based on the positioning accuracy of the UE 1. The positioning accuracy of the UE 2 represents a requirement on accuracy of positioning of the UE 2, and may be represented by accuracy 1. The sidelink positioning accuracy represents a requirement on accuracy of sidelink positioning, and may be represented by accuracy 2.

S412: The LMF 1 sends a location service request to a GMLC 2. Correspondingly, the GMLC 2 receives the location service request from the LMF 1.

The location service request is used to request to obtain the location information of the UE 2. The location service request may carry the target location time, and the target location time is used to determine the location information of the UE 2. For example, the location service request may be Ngmlc_Location_ProvideLocation Request. The location information of the UE 2 may be an absolute location of the UE 2. In this case, the LMF 1 may be used as an LCS client and initiate positioning of the UE 2. It should be noted that the LMF 1 may communicate with the GMLC 2 through a specific interface.

It may be understood that the location service request further carries an identifier of the UE 2 and an identifier of the LMF 1.

Optionally, the location service request may further carry the positioning accuracy (accuracy 1) of the UE 2.

S413: The GMLC 2 sends a second provide location request to an AMF 2. Correspondingly, the AMF 2 receives the second provide location request from the GMLC 2.

The second provide location request carries the target location time, the identifier of the UE 2, and an identifier of the GMLC 2. The second provide location request is used to request the AMF 2 to provide the location information of the UE 2.

Optionally, the second provide location request may further carry the positioning accuracy (accuracy 1) of the UE 2.

In a possible design solution, S412 and S413 may be replaced with the following: The

LMF 1 sends a location service request to the AMF 2. In this case, the location service request may carry the target location time, the identifier of the LMF 1, and the identifier of the UE 2. Optionally, the location service request may further carry the positioning accuracy (accuracy 1) of the UE 2.

S414: The AMF 2 sends a second determine location request to an LMF 2. Correspondingly, the LMF 2 receives the second determine location request from the AMF 2.

The second determine location request is used to request the LMF 2 to determine the location information of the UE 2. The second determine location request carries the target location time, the identifier of the UE 2, and an identifier of the AMF 2.

It should be noted that when the LMF 1 initiates a positioning procedure of the UE 2, for example, in a process of performing S412 to S414, processes in which the GMLC 2 obtains an address of the AMF 2 and determines whether the LMF 2 is authorized, the AMF 2 selects the LMF 2, and so on are also performed. For details, refer to the descriptions in S401 to S406 in which the LCS client initiates the positioning procedure of the UE 1. Details are not described herein again.

S415: The LMF 2 initiates positioning of the UE 2.

For example, the LMF 2 sends the target location time to the UE 2, the UE 2 performs cell signal measurement (for example, PRS measurement) based on the target location time, and reports positioning measurement data of the UE 2 obtained through measurement to the LMF 2, and the LMF 2 performs calculation based on the reported positioning measurement data of the UE 2, to obtain the location information of the UE 2. The positioning measurement data of the UE 2 may include a cell identifier (for example, a cell global identifier), a downlink reference signal received power of each cell, radio wave or PRS transmission time between the UE 2 and each cell, and a difference of signal round-trip time between the UE 2 and base stations of all cells.

In a possible design solution, the target location time may be a time point. In this case, the target location time may be referred to as a target location time point, and the UE 2 may perform cell measurement at the target location time point or before the target location time point.

For example, the target location time T_{D}=T_{S}. When the target location time point arrives, the UE 2 may perform cell signal measurement, and report the positioning measurement data of the UE 2 obtained through measurement to the LMF 2. For another example, the UE 2 may determine a timing advance based on time needed for measurement, for example, set the timing advance to Δt, and the UE 2 may perform cell measurement at a moment T_{D}-Δt, and report the positioning measurement data of the UE 2 obtained through measurement to the LMF 2. It should be noted that, based on the specified timing advance, the UE 2 may report the positioning measurement data of the UE 2 before the target location time point, may report the positioning measurement data of the UE 2 at the target location time point, or may report the positioning measurement data of the UE 2 after the target location time point. This is not limited herein.

In another possible design solution, the target location time may be in a form of a time point+a time interval.

For example, the target location time T_{D}=T_{S}+n•ΔT. n=3 may be understood as a quantity of times that the UE 2 needs to periodically report the positioning measurement data. Specifically, the UE 2 may start to perform cell signal measurement at the time point T_{S}, and complete measurement and report positioning measurement data of the UE 2 within the time interval ΔT; perform a second time of cell signal measurement at a time point T_{S}+ΔT, and also complete measurement and report positioning measurement data of the UE 2 within the time interval ΔT; perform a third time of cell signal measurement at a time point T_{S}+2ΔT, and also complete measurement and report positioning measurement data of the UE 2 within the time interval ΔT; and finally end cell measurement at a time point T_{S}+3ΔT.

It may be understood that, in a case of periodic measurement, the UE 2 may alternatively perform cell signal measurement before the target location time. Similarly, the timing advance is Δt. For example, the UE 2 may perform cell signal measurement at time points T_{S}-Δt, T_{S}+ΔT-Δt, and T_{S}+2ΔT-Δt. Correspondingly, the UE 2 may report positioning measurement data of the UE 2 at time points T_{S}, T_{S}+ΔT, and T_{S}+2ΔT, before T_{S}, T_{S}+ΔT, and T_{S}+2ΔT, or after T_{S}, T_{S}+ΔT, and T_{S}+2ΔT.

Optionally, the UE 2 may further send a timestamp to the LMF 2. The timestamp may indicate time of measuring the positioning measurement data, or may indicate time of reporting the positioning measurement data. It may be understood that the timestamp may be included in the location information of the UE 2. For example, the positioning measurement data of the UE 2 measured at Ts-Δt may be indicated by a timestamp.

Further, the LMF 2 may determine, based on the location information of the UE 2 obtained through calculation, positioning accuracy of the UE 2 (achieved positioning accuracy of the UE 2) obtained through measurement.

S416: The LMF 2 sends a second determine location response to the AMF 2. Correspondingly, the AMF 2 receives the second determine location response from the LMF 2.

The second determine location response carries the location information of the UE 2 and the positioning accuracy of the UE 2 obtained through measurement.

S417: The AMF 2 sends a location service response to the LMF 1.

The location service response carries the location information of the UE 2 and the positioning accuracy of the UE 2 obtained through measurement.

Correspondingly, the LMF 1 receives the location service response from the AMF 2, to obtain the location information of the UE 2 and the positioning accuracy of the UE 2 obtained through measurement.

Further, if the LMF 1 obtains the location information of the UE 2, and the positioning accuracy (the positioning accuracy of the UE 2 obtained through measurement) corresponding to the location information does not meet the positioning accuracy (accuracy 1) of the UE 2 determined in S411, the LMF 1 may perform S408 to S417 again, that is, reselect an assistant UE, to obtain location information of the reselected assistant UE.

In a possible design solution, S416 and S417 may be replaced with the following: After obtaining the location information of the UE 2 through calculation, the LMF 2 may send the location information of the UE 2 to the UE 2, the UE 2 sends the location information of the UE 2 to the UE 1, and the UE 1 sends the location information of the UE 2 to the LMF 1.

In a possible design solution, S417 may be replaced with the following: After obtaining the location information of the UE 2 through calculation, the LMF 2 may send the location information of the UE 2 to the GMLC 2, and the GMLC 2 sends the location information of the UE 2 to the LMF 1.

S418: The LMF 1 sends the target location time to the UE 1. Correspondingly, the UE 1 receives the target location time from the LMF 1.

The target location time may be carried in a downlink positioning message (DL positioning message) or an LCS period-triggered invoke request message (LCS Period-triggered invoke request message).

Optionally, the downlink positioning message or the LCS period-triggered invoke request message may further carry the sidelink positioning accuracy (accuracy 2).

It should be noted that in this embodiment of this application, an execution sequence of sending the target location time to the UE 2 by the LMF 1 (for example, step S412 to step S415) and sending the target location time to the UE 1 by the LMF 1 (for example, step S418) is not limited. The LMF 1 may separately send the target location time to the UE 1 and the UE 2, may first send the target location time to the UE 1, or may first send the target location time to the UE 2. For example, a sequence of performing S412 and S418 is not limited.

S419: The UE 1 sends the target location time to the UE 2. Correspondingly, the UE 2 receives the target location time from the UE 1.

For example, the UE 1 may send the target location time to the UE 2 through a sidelink (sidelink).

Optionally, the UE 1 further sends the sidelink positioning accuracy (accuracy 2) to the UE 2.

It may be understood that S419 is an optional step. For example, when the target location time is determined by the UE 2, S409 may not be performed.

S420: The UE 1 and the UE 2 determine the relative location information between the UE 1 and the UE 2 based on the target location time.

The relative location information may be relative distance information between the UE 1 and the UE 2, or may be relative angle information between the UE 1 and the UE 2.

In a possible design solution, S420 may include the following step 1-1 and step 1-2.

Step 1-1: The UE 1 sends a measurement signal to the UE 2 based on the target location time. Correspondingly, the UE 2 receives the measurement signal from the UE 1.

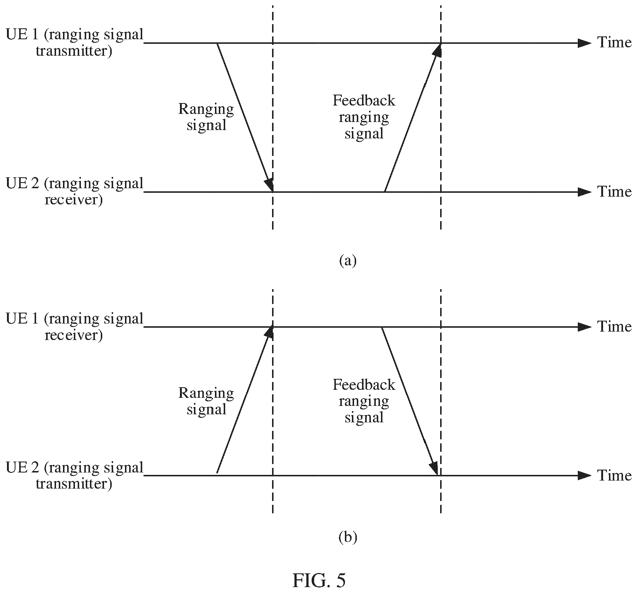

For example, FIG. 5 is a diagram of a structure of measuring a relative distance between the UE 1 and the UE 2. As shown in (a) in FIG. 5, the UE 1 is used as a ranging signal transmitter, and the UE 2 is used as a ranging signal receiver. In this case, the measurement signal may be a ranging signal.

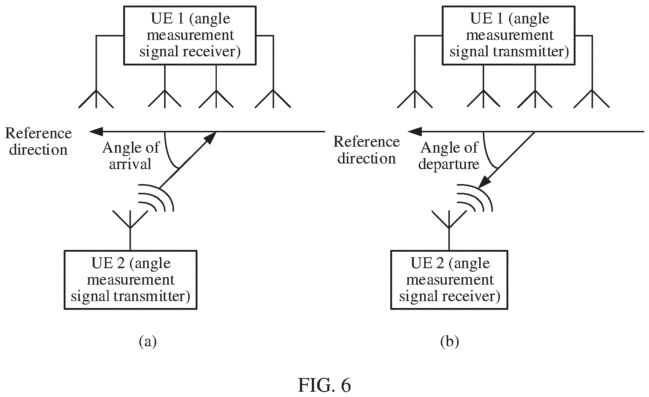

For another example, FIG. 6 is a diagram of a structure of measuring a relative angle between the UE 1 and the UE 2. (b) in FIG. 6 shows an angle of departure (angle of departure, AoD). The UE 1 is used as an angle measurement signal transmitter, the UE 2 is used as an angle measurement signal receiver, and the UE 2 may determine the relative angle between the UE 2 and the UE 1 based on a direction of receiving an angle measurement signal and a direction of a reference signal. In this case, the measurement signal may be the angle measurement signal.

In a possible design solution, the target location time may be a target location time point.

For example, the UE 1 may send the ranging signal or the angle measurement signal to the UE 2 at the target location time point, or may send the ranging signal or the angle measurement signal to the UE 2 before the target location time point. The ranging signal or the angle measurement signal is sent before the target location time point. The UE 1 may set a timing advance value. For example, the target location time T_{D}=T_{S}, and the timing advance is Δt. The UE 1 may send the ranging signal or the angle measurement signal to the UE 2 at a time point Ts-Δt.

In another possible design solution, the target location time may be in a form of a time point+a time interval.

For example, the target location time T_{D}=T_{S}+n•ΔT, where n=3. As shown in (a) in FIG. 5, the UE 1 may send a ranging signal at the time point Ts, receive a feedback ranging signal and perform a first time of ranging calculation within the time interval ΔT, and report relative distance information; send a ranging signal again at a time point T_{S}+ΔT, receive a feedback ranging signal and perform a second time of ranging calculation within the time interval ΔT, and report relative distance information; send a ranging signal again at a time point T_{S}+2ΔT, receive a feedback ranging signal and perform a third time of ranging calculation within the time interval ΔT, and report relative distance information; and finally end ranging calculation at a time point T_{S}+3ΔT.

Similarly, in a case of periodic measurement, the UE 1 may alternatively send the ranging signal in advance. For example, a timing advance is Δt, and the UE 1 may send ranging signals at time points T_{S}-Δt, T_{S}+ΔT-Δt, and T_{S}+2ΔT-Δt. Correspondingly, the UE 1 may report relative distance information at time points T_{S}, T_{S}+ΔT, and T_{S}+2ΔT, before T_{S}, T_{S}+ΔT, and T_{S}+2ΔT, or after T_{S}, T_{S}+ΔT, and T_{S}+2ΔT.

For another example, the target location time T_{D}=T_{S}+n•ΔT, where n=3. As shown in (b) in FIG. 6, the UE 1 may send an angle measurement signal at the time point T_{S}, send an angle measurement signal again at a time point T_{S}+ΔT, send an angle measurement signal again at a time point T_{S}+2ΔT, and finally end sending the angle measurement signal at a time point T_{S}+3ΔT.

Similarly, when the angle measurement signal is periodically sent, the UE 1 may alternatively send the angle measurement signal in advance. For example, a timing advance is Δt, and the UE 1 may send angle measurement signals at time points T_{S}-Δt, T_{S}+ΔT-Δt, and T_{S}+2ΔT-Δt.

Step 1-2: The UE 1 obtains the relative location information based on the measurement signal.

In a possible design solution, the UE 1 determines the relative location information based on the measurement signal.

For example, as shown in (a) in FIG. 5, after sending the ranging signal to the UE 2, the UE 1 receives the feedback ranging signal from the UE 2, and the UE 1 may calculate a relative distance between the UE 1 and the UE 2 based on a time difference between sending the ranging signal and receiving the feedback ranging signal. For a specific calculation process, refer to an existing implementation. Details are not described herein.

In a possible design solution, the UE 1 receives the relative location information from the UE 2.

For example, as shown in (b) in FIG. 6, after sending the angle measurement signal, the UE 1 may receive the relative angle calculated by the UE 2. The UE 2 may determine the relative angle between the UE 2 and the UE 1 based on the direction of receiving the angle measurement signal and the direction of the reference signal.

In another possible design solution, S420 may include the following step 2-1 to step 2-3.

Step 2-1: The UE 1 sends a positioning request to the UE 2 based on the target location time. Correspondingly, the UE 2 receives the positioning request from the UE 1.

For example, the UE 1 may send the positioning request at the target location time or before the target location time. The positioning request is used to request to position a relative location between the UE 1 and the UE 2. For a specific process of sending the positioning request based on the target location time, refer to the foregoing process of sending the measurement signal. Details are not described herein again.

Step 2-2: The UE 1 receives a measurement signal from the UE 2. Correspondingly, the UE 2 sends the measurement signal to the UE 1.

Correspondingly, after receiving the positioning request, the UE 2 sends the measurement signal to the UE 1. The measurement signal may be a ranging signal or may be an angle measurement signal. For details, refer to the related descriptions in step 1-1 or related descriptions in the following step 3-1.

Step 2-3: The UE 1 obtains the relative location information based on the measurement signal.

For a specific process of step 2-3, refer to the related descriptions in step 1-2 and related descriptions in the following step 3-2.

In another possible design solution, S420 may include the following step 3-1 and step 3-2.

Step 3-1: The UE 1 receives a measurement signal from the UE 2 based on the target location time. Correspondingly, the UE 2 sends the measurement signal to the UE 1.

As shown in (b) in FIG. 5, the UE 1 is used as a ranging signal receiver, and the UE 2 is used as a ranging signal transmitter. The UE 1 receives the measurement signal from the UE 2 based on the target location time. In this case, the measurement signal is a ranging signal.

For another example, (a) in FIG. 6 shows angle measurement based on an angle of arrival (angle of arrival, AoA). The UE 1 is used as an angle measurement signal receiver, and the UE 2 is used as an angle measurement signal transmitter. In this case, the measurement signal is an angle measurement signal.

In a possible design solution, the target location time may be a target location time point.

For example, the UE 1 may receive the ranging signal from the UE 2 at the target location time or before the target location time, and after receiving the ranging signal, the UE 2 sends a feedback ranging signal to the UE 2. For another example, the UE 1 may receive the angle measurement signal from the UE 2 at the target location time or before the target location time.

The ranging signal or the angle measurement signal is received from the UE 2 before the target location time point. The UE 1 may set a timing advance value. For example, the target location time T_{D}=T_{S}, and the timing advance is Δt. The UE 1 may receive the ranging signal or the angle measurement signal from the UE 2 at a time point T_{S}-Δt.

In another possible design solution, the target location time may be in a form of a time point+a time interval.

For example, the target location time T_{D}=T_{S}+n•ΔT, where n=3. As shown in (b) in FIG. 5, the UE 1 may receive a ranging signal from the UE 2 at the time point Ts, and send a feedback ranging signal within the time interval ΔT; receive a ranging signal from the UE 2 again at a time point T_{S}+ΔT, and send a feedback ranging signal within the time intervalΔT; receive a ranging signal from the UE 2 again at a time point T_{S}+2ΔT, and send a feedback ranging signal again within the time interval ΔT; and finally end sending the feedback ranging signal at a time point T_{S}+3ΔT.

Similarly, in a case of periodic measurement, the UE 1 may alternatively receive the ranging signal in advance. For example, a timing advance is Δt, and the UE 1 may receive ranging signals at time points T_{S}-Δt, T_{S}+ΔT-Δt, and T_{S}+2ΔT-Δt. Correspondingly, the UE 1 may send feedback ranging signals at time points T_{S}, T_{S}+ΔT, and T_{S}+2ΔT, before T_{S}, T_{S}+ΔT, and T_{S}+2ΔT, or after T_{S}, T_{S}+ΔT, and T_{S}+2ΔT.

For another example, the target location time T_{D}=T_{S}+n•ΔT, where n=3. As shown in (b) in FIG. 6, the UE 1 may receive an angle measurement signal from the UE 2 at the time point Ts, and calculate and report relative angle information within the time interval ΔT; receive an angle measurement signal from the UE 2 again at a time point T_{S}+ΔT, and calculate and report relative angle information within the time interval ΔT; receive an angle measurement signal from the UE 2 again at a time point T_{S}+2ΔT, and calculate and report relative angle information again within the time interval ΔT; and finally end receiving the angle measurement signal at a time point T_{S}+3ΔT.

Similarly, in a case of periodic measurement, the UE 1 may alternatively receive the angle measurement signal in advance. For example, a timing advance is Δt, and the UE 1 may receive angle measurement signals at time points Ts-Δt, T_{S}+ΔT-Δt, and T_{S}+2ΔT-Δt. Correspondingly, the UE 1 may report relative angle information at time points Ts, Ts+ΔT, and T_{S}+2ΔT, before T_{S}, T_{S}+ΔT, and T_{S}+2ΔT, or after T_{S}, T_{S}+ΔT, and T_{S}+2ΔT.

Step 3-2: The UE 1 obtains the relative location information based on the measurement signal.

In a possible design solution, the UE 1 receives the relative location information from the UE 2. Correspondingly, the UE 2 sends the relative location information to the UE 1.

For example, after the UE 1 sends the feedback ranging signal to the UE 2, the UE 2 may calculate relative distance information between the UE 1 and the UE 2 based on a time difference between sending the ranging signal and receiving the feedback ranging signal. For a specific calculation process, refer to an existing implementation. Details are not described herein.

In another possible design solution, the UE 1 determines the relative location information based on the measurement signal.

For example, the UE 1 may determine relative angle information between the UE 2 and the UE 1 based on a direction of receiving the angle measurement signal and a direction of a reference signal.

Correspondingly, the UE 2 may alternatively send the measurement signal to the UE 1 based on the target location time, or the UE 2 receives the measurement signal from the UE 1 based on the target location time. For details, refer to the foregoing process in which the UE 1 sends or receives the measurement signal based on the target location time. Details are not described herein again.

Optionally, the UE 1 or the UE 2 may determine features of the sent measurement signal based on the sidelink positioning accuracy (accuracy 2). The features of the measurement signal may be a bandwidth and a direction. For example, the UE 1 or the UE 2 determines, based on direction accuracy in the accuracy 2, a beam direction for sending or receiving the measurement signal (because a finer beam indicates a more accurate direction), or determines, based on distance accuracy in the accuracy 2, a sending bandwidth of the measurement signal (because a larger signal bandwidth indicates a smaller positioning signal slot and a more accurate calculated distance).

Optionally, the UE 1 may further determine a PC5 discontinuous reception (discontinuous reception, DRX) parameter based on the target location time, and then the UE 1 determines the relative location information based on the PC5 DRX parameter. The PC5 DRX parameter includes a DRX cycle (DRX cycle) and reception window length (reception window length). For example, the DRX cycle is 1 second, and the reception window length is 500 milliseconds. The PC5 DRX parameter may indicate that there are 500 milliseconds for receiving or sending data in every 1 second.

Specifically, the UE 1 may determine the PC5 DRX1 parameter based on the target location time and the time interval ΔT. For example, the DRX cycle of the PC5 DRX may include one or more time intervals ΔT. If the target location time may be a time point, for example, T_{D}=T_{S}, the target location time may be used as an activation time point in the DRX cycle. When the activation time point (the target location time) arrives, the UE 1 is changed from a sleep state to an activated state to receive or send data. If the target location time is a time period including a time point and a time interval, for example, T_{D}=T_{S}+n•ΔT, when the time point Ts in the specified DRX cycle arrives, the UE 1 is changed from a sleep state to an activated state to receive or send data, and the UE 1 is always in the activated state in the time period T_{D}. It may be understood that the DRX cycle is greater than duration of T_{D}. For a specific process in which the UE 1 sends or receives the measurement signal based on the PC5 DRX parameter, to determine the relative location information, refer to the foregoing process of determining the relative location information based on the target location time. Details are not described herein again.

S421: The UE 1 sends the relative location information to the LMF 1. Correspondingly, the LMF 1 receives the relative location information from the UE 1.

The relative location information may be the relative distance information between the UE 1 and the UE 2, or may be the relative angle information between the UE 1 and the UE 2. In embodiments of this application, the relative distance information may be a result of the relative distance, or measurement data of the relative distance (for example, the time difference between sending the ranging signal and receiving the feedback ranging signal). The relative angle information may be a result of the relative angle, or measurement data of the relative angle (for example, the direction of receiving the angle measurement signal).

It should be understood that, if the relative distance information is the result of the relative distance, the UE 1 needs to calculate the result of the relative distance based on the measurement data of the relative distance; or if the relative distance information is the measurement data of the relative distance, the UE 1 does not need to perform calculation on the measurement data of the relative distance. If the relative angle information is the result of the relative angle, the UE 1 needs to calculate the result of the relative angle based on the measurement data of the relative angle; or if the relative angle information is the measurement data of the relative angle, the UE 1 does not need to perform calculation on the measurement data of the relative angle.

S422: The LMF 1 determines the location information of the UE 1 based on the location information of the UE 2 and the relative location information.

For example, the LMF 1 performs calculation based on the location information of the UE 2 obtained in S415 and the relative location information obtained in S420, to obtain the location information of the UE 1.

Optionally, the LMF 1 may further obtain the positioning measurement data of the UE 1 based on the target location time. For details, refer to the process of obtaining the positioning measurement data of the UE 2 in S415. Details are not described herein again. Further, the LMF 1 may perform calculation based on the positioning measurement data of the UE 1, the location information of the UE 2, and the relative location information that are obtained by using the target location time, to obtain the location information of the UE 1.

S423: The LMF 1 sends a first determine location response to the AMF 1. Correspondingly, the AMF 1 receives the first determine location response from the LMF 1.

The first determine location response carries the location information of the UE 1.

S424: The AMF 1 sends a first location obtaining response to the GMLC 1. Correspondingly, the GMLC 1 receives the first location obtaining response from the AMF 1.

The first location obtaining response carries the location information of the UE 1.

S425: The GMLC 1 sends an LCS service response to the LCS client. Correspondingly, the LCS client receives the LCS service response from the GMLC 1.

The LCS service response carries the location information of the UE 1.

Based on the method for obtaining location information shown in FIG. 4A to FIG. 4C, the LCS client may trigger positioning of the UE 1. The LMF 1 performs positioning measurement on the UE 1 based on the scheduled location time (the target location time) and in combination with the UE 2. Based on the specified target location time, the location information of the UE 2 and the relative location information between the UE 1 and the UE 2 may be obtained through measurement simultaneously or at the same time. Then, the LMF 1 performs calculation based on the location information of the UE 2 and the relative location information between the UE 1 and the UE 2 that are synchronously obtained, to obtain the location information of the UE 1, so that a problem of inaccurate positioning of a UE caused by inaccurate measurement data due to mobility of the UE can be resolved, thereby improving positioning accuracy and accuracy of the UE.

For example, FIG. 7 is a schematic flowchart 2 of a method for obtaining location information according to an embodiment of this application. In the method for obtaining location information, a UE 1 may initiate positioning, and an LMF 1 determines location information of the UE 1.

As shown in FIG. 7, the method for obtaining location information includes the following steps.

S701: The UE 1 determines a positioning manner.

The positioning manner may include Uu positioning, sidelink positioning, and Uu and sidelink hybrid positioning. For example, the UE 1 may determine the positioning manner based on a quantity of measured cells. For example, if the quantity of measured cells is insufficient, the UE 1 may determine the positioning manner as the Uu and sidelink hybrid positioning or select the Uu and sidelink hybrid positioning.

Optionally, S701 may be replaced with the following: The UE 1 determines that an assistant UE is needed to assist in positioning.

S702: The UE 1 performs an assistant UE discovery procedure.

For example, the UE 1 discovers and selects the assistant UE, where the determined assistant UE is a UE 2, and obtains an identifier of the UE 2. The identifier of the UE 2 may be a GPSI, or may be an SUCI.

S703: The UE 1 obtains target location time.

The target location time may be scheduled location time (scheduled location time).

In a possible design solution, the UE 1 may generate the target location time. For example, the UE 1 may determine the target location time based on an application requirement, or the application requirement includes the target location time. For example, after determining the target location time, the UE 1 sends a confirmation request to the UE 2. The confirmation request is used to request the UE 2 to confirm whether the specified target location time is appropriate.

In another possible design solution, the UE 1 may receive the target location time from the UE 2. In other words, the UE 1 may request to obtain the target location time from the UE 2, and the UE 2 provides the target location time for the UE 1.

In still another possible design solution, the UE 1 may receive the target location time from the LMF 1. In this case, it may be understood that the following S704 to S706 may be performed before S703, and the UE 1 does not need to send the target location time to the LMF 1.

Similarly, the target location time may be a target location time point, or may be in a form of a time point+a time interval. For details, refer to the related descriptions in S411. Details are not described herein again.

S704: The UE 1 sends a first mobile originated location request (mobile originated location request, MO-LR) to an AMF 1. Correspondingly, the AMF 1 receives the first MO-LR request from the UE 1.

The first MO-LR request may be carried in an uplink non-access stratum (non-access stratum, NAS) transport message (UL NAS TRANSPORT message), and the first MO-LR request carries the target location time, an identifier of the UE 1, and the identifier of the UE 2.

Optionally, the first MO-LR request may further carry positioning accuracy (accuracy) of the UE 1.

S705: The AMF 1 selects the LMF 1.

Specifically, for S705, refer to the related descriptions in S405. Details are not described herein again.

S706: The AMF 1 sends a third determine location request to the LMF 1. Correspondingly, the LMF 1 receives the third determine location request from the AMF 1.

The third determine location request is used to request the LMF 1 to determine the location information of the UE 1. The third determine location request carries the target location time, the identifier of the UE 1, and the identifier of the UE 2.

Optionally, the third determine location request carries the positioning accuracy (accuracy) of the UE 1.

Optionally, in S707, the LMF 1 initiates positioning of the UE 1.

Specifically, for S707, refer to the related descriptions in S415. Details are not described herein again.

In a possible case, if S703 is not performed, that is, the UE 1 does not determine the target location time, and the target location time is not carried in S704 or S706, the LMF 1 may generate the target location time based on S411, and send the target location time to the UE 1 in step S707. Further, optionally, the UE 1 may send the target location time to the UE 2.

S708: The LMF 1 initiates positioning of the UE 2.

Specifically, for S708, refer to the specific content of S412 to S417. Details are not described herein again.

S709: The UE 1 and the UE 2 determine relative location information between the UE 1 and the UE 2 based on the target location time.

The UE 2 may obtain the target location time based on S703 or S707.

S710: The UE 1 sends the relative location information to the LMF 1. Correspondingly, the LMF 1 receives the relative location information from the UE 1.

S711: The LMF 1 determines the location information of the UE 1 based on location information of the UE 2 and the target location time.

For a specific process of S709 to S711, refer to S420 to S422. Details are not described herein again.

S712: The LMF 1 sends a third determine location response to the AMF 1. Correspondingly, the AMF 1 receives the third determine location response from the LMF 1.

The third determine location response carries the location information of the UE 1.

S713: The AMF 1 sends a first MO-LR response to the UE 1. Correspondingly, the UE 1 receives the first MO-LR response from the AMF 1.

The first MO-LR response carries the location information of the UE 1.

Based on the method for obtaining location information shown in FIG. 7, the UE 1 may trigger positioning. The UE 1 and the UE 2 negotiate to determine the target location time. Based on the specified target location time, the location information of the UE 2 and the relative location information between the UE 1 and the UE 2 may be obtained through measurement simultaneously or at the same time. Then, the LMF 1 performs calculation based on the location information of the UE 2 and the relative location information between the UE 1 and the UE 2 that are synchronously obtained, to obtain the location information of the UE 1, so that a problem of inaccurate positioning of a UE caused by inaccurate measurement data due to mobility of the UE can also be resolved, thereby improving positioning accuracy and accuracy of the UE.

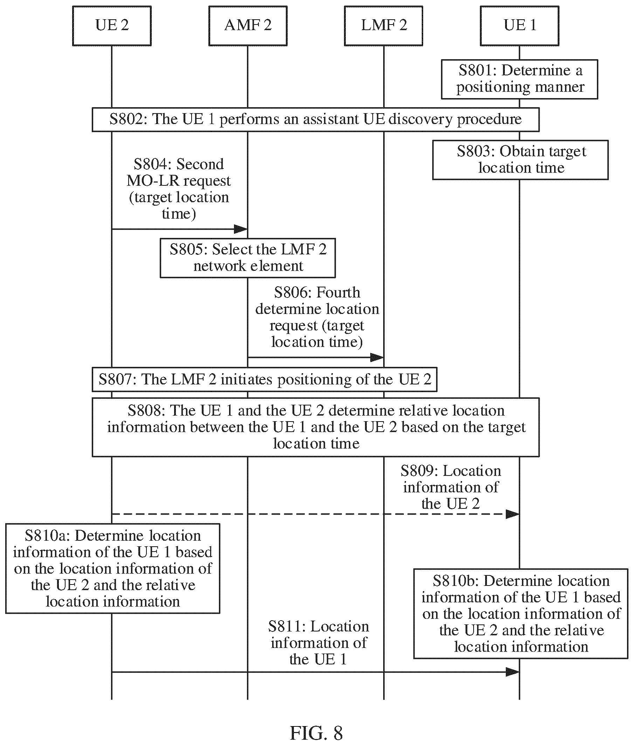

For example, FIG. 8 is a schematic flowchart 3 of a method for obtaining location information according to an embodiment of this application. In the method for obtaining location information, when a UE 1 cannot access a network, the UE 1 or a UE 2 may determine location information of the UE 1.

As shown in FIG. 8, the method for obtaining location information includes the following steps.

S801: The UE 1 determines a positioning manner.

When the UE 1 cannot access the network, the UE 1 cannot perform signal measurement with a surrounding cell, and the UE 1 may determine the positioning manner as Uu and sidelink hybrid positioning.

Optionally, S801 may be replaced with the following: The UE 1 determines that an assistant UE is needed to assist in positioning.

S802: The UE 1 performs an assistant UE discovery procedure.

S803: The UE 1 obtains target location time.

In a possible design solution, the UE 1 may generate the target location time. For example, the UE 1 may determine the target location time based on an application requirement, or the application requirement includes the target location time. The UE 1 sends the target location time to the UE 2. For example, after determining the target location time, the UE 1 sends a confirmation request to the UE 2. The confirmation request is used to request the UE 2 to confirm whether the specified target location time is appropriate.

In another possible design solution, the UE 1 may receive the target location time from the UE 2. In other words, the UE 1 may request to obtain the target location time from the UE 2, and the UE 2 provides the target location time for the UE 1.

It should be noted that, different from S703, the UE 1 cannot obtain the target location time from an LMF 1. The target location time may be obtained by the UE 1 and the UE 2 through negotiation. For a specific type of the target location time, refer to the related descriptions in S411. Details are not described herein again.

It may be understood that the UE 2 may obtain the target location time based on the foregoing process.

S804: The UE 2 sends a second MO-LR request to an AMF 2. Correspondingly, the AMF 2 receives the second MO-LR request from the UE 2.

The second MO-LR request carries the target location time and an identifier of the UE 2. For example, the UE 2 may send the second MO-LR request to the AMF 2 at specific time before the target location time, so that positioning measurement of the UE 2 can be completed at the target location time or before the target location time.

Optionally, the second MO-LR request may further carry positioning accuracy (accuracy 1) of the UE 2.

Optionally, the UE 2 may alternatively determine positioning accuracy (accuracy 1) of the UE 2 and sidelink positioning accuracy (accuracy 2) based on positioning accuracy (accuracy) of the UE 1.

S805: The AMF 2 selects an LMF 2.

S806: The AMF 2 sends a fourth determine location request to the LMF 2. Correspondingly, the LMF 2 receives the fourth determine location request from the AMF 2.

The fourth determine location request is used to request the LMF 2 to determine location information of the UE 2. The fourth determine location request carries the target location time and an identifier of the UE 2.

Optionally, the fourth determine location may further carry the positioning accuracy (accuracy 1) of the UE 2.

S807: The LMF 2 initiates positioning of the UE 2.

For example, after receiving the fourth determine location request, the LMF 2 indicates the UE 2 to perform positioning measurement, and the UE 2 performs cell measurement based on the target location time. For a specific process, refer to S415. Details are not described herein again.

It should be noted that, after S807 is completed, the LMF 2 sends, to the UE 2, the location information of the UE 2 that is obtained through calculation based on positioning measurement data of the UE 2.

S808: The UE 1 and the UE 2 determine relative location information based on the target location time.

For a specific process of S808, refer to S402. Details are not described herein again.

S809: The UE 2 sends the location information of the UE 2 to the UE 1. Correspondingly, the UE 1 receives the location information of the UE 2 from the UE 2.

For example, after obtaining the location information of the UE 2 sent by the LMF 2, the UE 2 may send the location information of the UE 2 to the UE 1, and perform the following S810b.

It may be understood that S809 is an optional step. When the UE 2 calculates the location information of the UE 1 (for example, step S810a), S809 may not be performed, and the following S810a is performed.

S810a: The UE 2 determines the location information of the UE 1 based on the location information of the UE 2 and the relative location information.

For example, the UE 2 performs calculation based on the location information of the UE 2 obtained in S807 and the relative location information obtained in S808, to obtain the location information of the UE 1. Further, after S810a is performed, the following S811 is performed.

S810b: The UE 1 determines the location information of the UE 1 based on the location information of the UE 2 and the relative location information.

For example, the UE 1 performs calculation based on the location information of the UE 2 sent by the UE 2 and the relative location information obtained in S808, to obtain the location information of the UE 1. Further, after S810b is performed, the UE 1 may also send the location information of the UE 1 to the UE 2. Correspondingly, the UE 2 receives the location information of the UE 1 from the UE 1.

S811: The UE 2 sends the location information of the UE 1 to the UE 1. Correspondingly, the UE 1 receives the location information of the UE 1 from the UE 2.

Based on the method for obtaining location information shown in FIG. 8, considering that the UE 1 cannot access the network due to mobility of the UE 1, the UE 2 used as an assistant UE may assist in obtaining a location of the UE 1. The UE 1 and the UE 2 negotiate to determine the target location time. Based on the specified target location time, the UE 2 may actively trigger the LMF 2 to perform positioning to obtain the location information of the UE 2 and measurement of a relative location between the UE 1 and the UE 2. Further, the UE 1 or the UE 2 may perform calculation based on the location information of the UE 2 and the relative location information that are obtained simultaneously or at the same time, to obtain the location information of the UE 1, so that accurate positioning of the UE 1 can also be implemented without forwarding processing of the LMF 1.

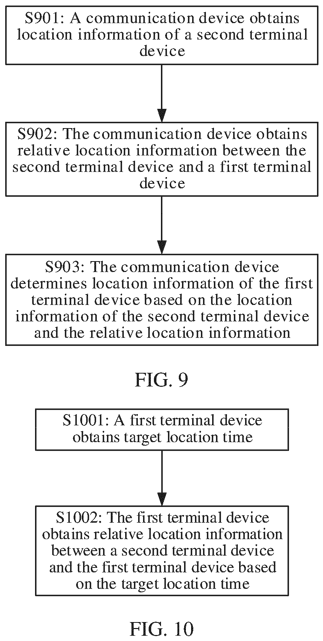

The foregoing describes in detail, with reference to FIG. 4A to FIG. 4C to FIG. 8, procedures of the method for obtaining location information provided in embodiments of this application in various scenarios. Positioning of the UE 1 is implemented based on the preset target location time and based on a combination of Uu positioning and sidelink positioning. In other words, the location information of the UE 2 and the relative location information between the UE 1 and the UE 2 that are obtained through measurement at the same time are obtained, to obtain the accurate location information of the UE 1. The following describes an overall procedure of the method for obtaining location information with reference to FIG. 9 to FIG. 11.

For example, FIG. 9 is a schematic flowchart 4 of a method for obtaining location information according to an embodiment of this application. The method for obtaining location information is described by using an example in which a communication device is used as an execution body. The communication device may be a first location management function network element, a first terminal device, or a second terminal device. The first location management function network element may be the LMF 1, the first terminal device may be the UE 1, and the second terminal device may be the UE 2. As shown in FIG. 9, the method for obtaining location information may include the following steps.

S901: The communication device obtains location information of the second terminal device.

The second terminal device is configured to assist in positioning of the first terminal device. The location information of the second terminal device is determined based on target location time, and the target location time is obtained by the communication device.

In a possible design solution, the communication device may be the first location management function network element, and the first location management function network element is configured to serve the first terminal device.

In a possible design solution, the first location management function network element may receive scheduled positioning information from a location server, where the scheduled positioning information may include one or more of scheduled location time, a time interval, or response time, and obtain the target location time based on the scheduled positioning information. The location server may be the LCS client. In another possible design solution, the first location management function network element may receive the target location time from the first terminal device.

Further, the first location management function network element may send the target location time to a first gateway mobile location center. The first gateway mobile location center is configured to serve the second terminal device, and the first gateway mobile location center may be the GMLC 2. Alternatively, the first location management function network element may send the target location time to a first mobility management function network element. The first mobility management function network element is configured to serve the second terminal device, and the first mobility management function network element may be the AMF 2. The first location management function network element may send the target location time to the second terminal device through the first gateway mobile location center or the first mobility management function network element, so that the second terminal device may perform cell measurement based on the target location time, to obtain positioning measurement data of the second terminal device, and send the positioning measurement data of the second terminal device to a second location management function network element. The second location management function network element obtains the location information of the second terminal device through calculation. Further, the first location management function network element may obtain the location information of the second terminal device from the second location management function network element. For a specific process, refer to the related content in S411 to S417 and S703 to S708. Details are not described herein again.

In another possible design solution, the communication device may be the first terminal device, and the first terminal device may locally obtain the target location time. In this case, the first terminal device may send the target location time to the second terminal device. In still another possible design solution, the first terminal device may alternatively obtain the target location time from the second terminal device. Further, the second terminal device may initiate a positioning request to a second location management function network element, perform cell measurement based on the target location time, to obtain positioning measurement data of the second terminal device, and then send the positioning measurement data of the second terminal device to the second location management function network element, so that the second location management function network element obtains the location information of the second terminal device through calculation. Further, the second terminal device may obtain the location information of the second terminal device from the second location management function network element, and send the location information of the second terminal device to the first terminal device. Optionally, the second terminal device sends the target location time to the second location management function network element. For a specific process, refer to the related content in S803 to S807. Details are not described herein again.

In still another possible design solution, the communication device may be the second terminal device. The second terminal device may locally obtain the target location time. In this case, the second terminal device may send the target location time to the first terminal device. In still another possible design solution, the second terminal device may alternatively obtain the target location time from the first terminal device. Further, the second terminal device may initiate a positioning request to a second location management function network element, perform cell measurement based on the target location time, to obtain positioning measurement data of the second terminal device, and then send the positioning measurement data of the second terminal device to the second location management function network element, so that the second location management function network element obtains the location information of the second terminal device through calculation. Further, the second terminal device may obtain the location information of the second terminal device from the second location management function network element. For a specific process, refer to the related content in S803 to S807. Details are not described herein again.

S902: The communication device obtains relative location information between the second terminal device and the first terminal device.

The relative location information is determined based on the target location time. The relative location information may be relative distance information, or may be relative angle information. This is not specifically limited in embodiments of this application.

In a possible design solution, in a scenario in which the communication device is the first location management function network element:

If the first location management function network element may locally obtain the target location time, for example, if the first location management function network element does not obtain the target location time from the terminal device or the location server, the first location management function network element may locally configure and generate the target location time, so that the first location management function network element may send the target location time to the first terminal device, and the first terminal device sends the target location time to the second terminal device. The target location time is used to determine the relative location information between the second terminal device and the first terminal device.

If the first location management function network element obtains the target location time from the first terminal device, the first terminal device and the second terminal device may interact to obtain the target location time. The target location time is used to determine the relative location information between the second terminal device and the first terminal device. Further, the first terminal device or the second terminal device may determine the relative location information based on the target location time. The first terminal device or the second terminal device may send or receive a measurement signal based on the target location time, and may further determine the relative location information based on the measurement signal. In a possible design solution, the first terminal device may receive a measurement signal from the second terminal device based on the target location time, and then obtain the relative location information based on the measurement signal. Alternatively, the first terminal device may send a measurement signal to the second terminal device based on the target location time, and then obtain the relative location information based on the measurement signal. Alternatively, the first terminal device may send a positioning request to the second terminal device based on the target location time, the second terminal device may send a measurement signal to the first terminal device based on the positioning request, and then the first terminal device obtains the relative location information based on the measurement signal. Therefore, the first location management function network element may receive the relative location information from the first terminal device.

In a possible design solution, in a scenario in which the communication device is the first terminal device or the second terminal device:

After the first terminal device or the second terminal device locally obtains the target location time, the first terminal device and the second terminal device may interact to obtain the target location time.

Further, in a possible design solution, the first terminal device may obtain the relative location information based on the target location time. For example, the first terminal device may receive a measurement signal from the second terminal device based on the target location time, and then obtain the relative location information based on the measurement signal. Alternatively, the first terminal device may send a measurement signal to the second terminal device based on the target location time, and then obtain the relative location information based on the measurement signal. Alternatively, the first terminal device may send a positioning request to the second terminal device based on the target location time, the second terminal device may send a measurement signal to the first terminal device based on the positioning request, and then the first terminal device obtains the relative location information based on the measurement signal.

In another possible design solution, the second terminal device may send a measurement signal to the first terminal device based on the target location time. Alternatively, the second terminal device receives a measurement signal from the first terminal device based on the target location time.

The first terminal device or the second terminal device may send or receive the measurement signal based on the target location time, and obtain the relative location information.

For a specific implementation process of S902, refer to the related content in S418 to S421, S709 and S710, or S808. Details are not described herein again.

S903: The communication device determines location information of the first terminal device based on the location information of the second terminal device and the relative location information.

In a possible design solution, in a scenario in which the communication device is the first location management function network element:

The first location management function network element receives the location information of the second terminal device from the second location management function network element, receives the relative location information from the first terminal device, and performs calculation based on the location information of the second terminal device and the relative location information, to obtain the location information of the first terminal device. For a specific process, refer to the related descriptions in S421 and S422 or S710 and S711. Details are not described herein again.

In another possible design solution, in a scenario in which the communication device is the first terminal device:

The first terminal device may obtain the location information of the second terminal device from the second terminal device, and the second terminal device may obtain the location information of the second terminal device from the second location management function network element, so that the first terminal device may perform calculation based on the location information of the second terminal device and the relative location information, to obtain the location information of the first terminal device. Optionally, the first terminal device may receive the relative location information from the second terminal device. For details, refer to the related descriptions in S809 and S810b. Details are not described herein again.

In still another possible design solution, in a scenario in which the communication device is the second terminal device:

The second terminal device may obtain the location information of the second terminal device from the second location management function network element, and may obtain the location information of the first terminal device through calculation based on the location information of the second terminal device and the relative location information. Optionally, the second terminal device may receive the relative location information from the first terminal device. For details, refer to the related descriptions in S810a. Details are not described herein again.

For example, FIG. 10 is a schematic flowchart 5 of a method for obtaining location information according to an embodiment of this application. The method for obtaining location information is described by using an example in which a first terminal device is used as an execution body. The first terminal device may be the UE 1. As shown in FIG. 10, the method for obtaining location information may include the following steps.

S1001: The first terminal device obtains target location time.

The target location time may be one or more time points used for positioning measurement, or may be one or more time periods including a time point and a time interval. This is not limited in embodiments of this application.

In a possible design solution, the first terminal device may receive the target location time from a first location management function network element. The first location management function network element is configured to serve the first terminal device, and the first location management function network element may be the LMF 1. In this scenario, the first terminal device may further send the target location time to a second terminal device. For a specific process in which the first terminal receives the target location time and specific content of the target location time, refer to the related descriptions in S411 and S418. Details are not described herein again.

In another possible design solution, the first terminal device may locally obtain the target location time. For example, the first terminal device may determine the target location time based on an application requirement, or the application requirement includes the target location time. In this scenario, the first terminal device may further send the target location time to a first location management function network element. For a specific process, refer to the related descriptions in S703 and S704. Details are not described herein again.

In still another possible design solution, the first terminal device may receive the target location time from a second terminal device. The second terminal device is configured to assist in positioning of the first terminal device, and the second terminal device may be the UE 2. In this scenario, the first terminal device may also send the target location time to a first location management function network element. For a specific implementation process, refer to the related descriptions in S703 and S704. Details are not described herein again.

S1002: The first terminal device obtains relative location information between the second terminal device and the first terminal device based on the target location time.

In a possible design solution, S1002 may include the following step 4-1 and step 4-2.

Step 4-1: The first terminal device receives a measurement signal from the second terminal device based on the target location time.

The measurement signal may be a ranging signal or may be an angle measurement signal. This is not limited in embodiments of this application.

For example, the first terminal device may receive the measurement signal from the second terminal device at the target location time or before the target location time.

Step 4-2: The first terminal device obtains the relative location information between the second terminal device and the first terminal device based on the measurement signal.

In another possible design solution, S1002 may include the following step 5-1 and step 5-3.

Step 5-1: The first terminal device sends a positioning request to the second terminal device based on the target location time.

Correspondingly, the second terminal device receives the positioning request from the first terminal device. The first terminal device may send the positioning request to the second terminal device at the target location time or before the target location time.

Step 5-2: The first terminal device receives a measurement signal from the second terminal device.

For example, after receiving the positioning request, the second terminal device sends the measurement signal to the first terminal device based on the positioning request. The measurement signal may be a ranging signal or may be an angle measurement signal. This is not limited in embodiments of this application.

Alternatively, step 5-3: The first terminal device obtains the relative location information between the second terminal device and the first terminal device based on the measurement signal.

In still another possible design solution, S1002 may include the following step 6-1 and step 6-3.

Step 6-1: The first terminal device sends a measurement signal to the second terminal device based on the target location time.

Correspondingly, the second terminal device receives the measurement information from the first terminal device. The first terminal device may also send the measurement signal to the second terminal device at the target location time or before the target location time.

The measurement signal may be a ranging signal or may be an angle measurement signal. This is not limited in embodiments of this application.

Step 6-2: The first terminal device obtains the relative location information between the second terminal device and the first terminal device based on the measurement signal. The relative location information is determined based on the measurement signal.

Alternatively, step 6-3: The first terminal device receives the relative location information between the second terminal device and the first terminal device from the second terminal device.

For specific implementation processes of the three implementable design solutions of S1002, refer to the related content in S420 or S709 or S808. Details are not described herein again.

Further, after the first terminal device obtains the relative location information, the first terminal device may further receive location information of the second terminal device from the second terminal device. The location information of the second terminal device is determined based on the target location time (refer to the related descriptions in S804 to S807). Further, the first terminal device may determine location information of the first terminal device based on the relative location information and the location information of the second terminal device. For a specific implementation process in which the first terminal device determines the location information of the first terminal device, refer to the method embodiment shown in FIG. 8, for example, the related content in S808 and S809 and S810b.

Based on the method for obtaining location information shown in FIG. 10, the first terminal device may periodically send or receive the measurement signal based on the obtained target location time, and may determine the relative location information between the first terminal device and the second terminal device based on receiving or sending of the measurement signal, to position the first terminal device.

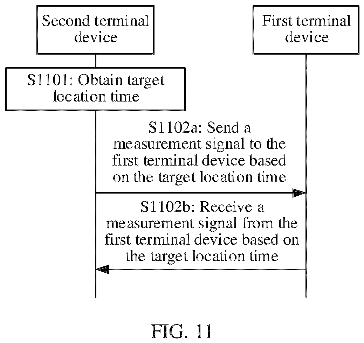

For example, FIG. 11 is a schematic flowchart 6 of a method for obtaining location information according to an embodiment of this application. The method for obtaining location information is described by using an example in which a second terminal device is used as an execution body. The second terminal device may be the UE 2. As shown in FIG. 11, the method for obtaining location information may include the following steps.

S1101: The second terminal device obtains target location time.

In a possible design solution, the second terminal device may locally obtain the target location time. In another possible design solution, the second terminal device may receive the target location time from a first terminal device. The second terminal device is configured to assist in positioning of the first terminal device, and the first terminal device may be the UE 1. In addition, for a specific implementation process of S1101, refer to the related descriptions in S701 or S803. Details are not described herein again.

Further, based on the foregoing two possible scenarios, the second terminal device may send the target location time to a second location management function. The second location management function network element is configured to serve the second terminal device and may be the LMF 2, and the target location time is used to determine location information of the second terminal device. For a specific implementation process, refer to the related descriptions in S804 to S807. Details are not described herein again.

S1102a: The second terminal device sends a measurement signal to the first terminal device based on the target location time.

Alternatively, S1102b: The second terminal device receives measurement information from the first terminal device based on the target location time.

The measurement signal is used to determine relative location information between the first terminal device and the second terminal device. The measurement signal may be a ranging signal or may be an angle measurement signal. This is not limited in embodiments of this application.

Specifically, for a specific implementation process of S1102a or S1102b, refer to the related descriptions in S420 or S709 or S808. Details are not described herein again.

In a possible design solution, the second terminal device may alternatively receive relative location information from the first terminal device, and receive the location information of the second terminal device from the second location management function network element. The location information of the second terminal device is determined based on the target location time. Further, after determining location information of the first terminal device based on the location information of the second terminal device and the relative location information, the second terminal device may send the location information of the first terminal device to the first terminal device.

In another possible design solution, the second terminal device may receive the location information of the second terminal device from the second location management function network element. The location information of the second terminal device is determined based on the target location time. The second terminal device sends the location information of the second terminal device to the first terminal device. The location information of the second terminal device is used to determine location information of the first terminal device.

For the two possible specific implementation processes, refer to S803 to S811. Details are not described herein again.

Based on the method for obtaining location information shown in FIG. 11, the second terminal device may also periodically send or receive the measurement signal based on the obtained target location time, and may determine the relative location information between the first terminal device and the second terminal device based on receiving or sending of the measurement signal, to assist in positioning of the first terminal device.

Based on the methods for obtaining location information shown in FIG. 4A to FIG. 4C to FIG. 11, the communication device may assist in positioning of the first terminal device through the second terminal device, measure and determine the location information of the second terminal device and the relative location information between the first terminal device and the second terminal device based on the same target location time, to avoid a problem that data used for calculating positioning of the first terminal device is not synchronized, and determine the location information of the first terminal device by using the location information of the second terminal device and the relative location information that are measured simultaneously or at the same time, so that a problem of inaccurate positioning of a terminal device caused by mobility of the terminal device can be resolved, thereby improving positioning accuracy and accuracy of the terminal device.

In addition, in a scenario in which a UE accesses a mobile base station relay (mobile base station relay), because the mobile base station relay moves (a location is not fixed), embodiments of this application further provide a method for obtaining location information, to position the UE that accesses the mobile base station relay. For example, a first terminal device is a UE 1, a first location management function network element is an LMF 1, a mobility management function network element that serves the first terminal device is an AMF 1, a gateway mobile location center that serves the first terminal device is a GMLC 1, a mobile relay device is a mobile base station relay, a gateway mobile location center that serves the mobile relay device is a GMLC 3, a mobility management function network element that serves the mobile relay device is an AMF 3, and a third location management function network element that serves the mobile relay device is an AMF 3. The mobile base station relay may be an integrated access and backhaul (integrated access and backhaul, IAB) node. The mobile base station relay may be used as a base station to provide access for the first terminal device, or may be used as a terminal to access a network.

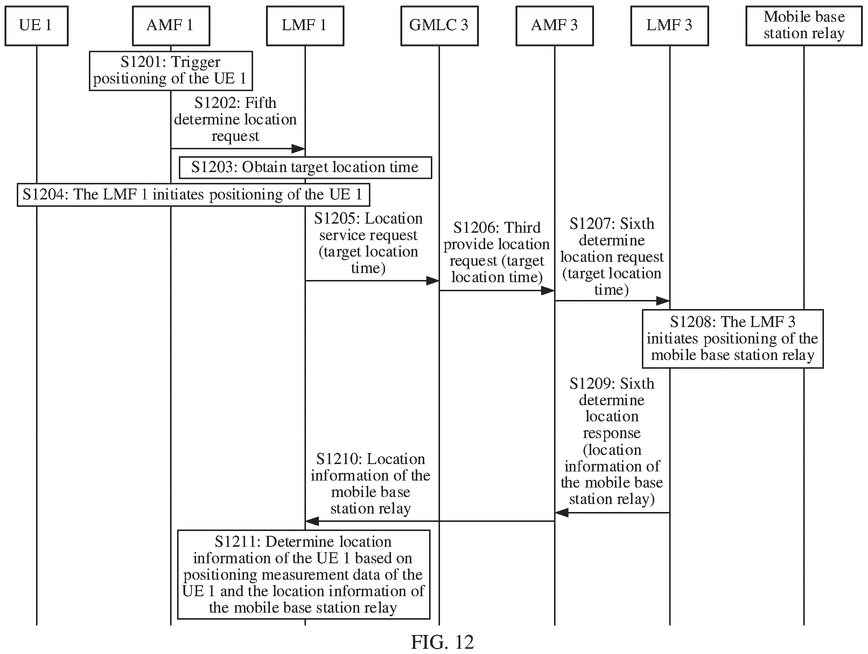

FIG. 12 is a schematic flowchart 7 of a method for obtaining location information according to an embodiment of this application. As shown in FIG. 12, the method for obtaining location information includes the following steps.

S 1201: An AMF 1 triggers positioning of a UE 1.

For example, the AMF 1 may receive a positioning request from a GMLC 1. The positioning request may be a provide location request. For details, refer to the specific process of S401 to S405. Details are not described herein again. The AMF 1 may alternatively receive a positioning request from the UE 1. The positioning request may be an MO-LR request. For details, refer to S704 and S705. Details are not described herein again.

The positioning request received by the AMF 1 may carry scheduled positioning information, and the scheduled positioning information may include one or more of positioning accuracy of the UE 1, scheduled location time, a time interval, or response time.

Further, the AMF 1 determines information about a cell accessed by the UE 1. The information about the cell includes an identifier of a mobile base station relay obtained by the UE 1 by accessing the mobile base station relay and an identifier of another accessed cell.

S1202: The AMF 1 sends a fifth determine location request to an LMF 1. Correspondingly, the LMF 1 receives the fifth determine location request from the AMF 1.

The fifth determine location request is used to request the LMF 1 to determine location information of the UE 1. The fifth determine location request carries an identifier of the UE 1, for example, a GPSI or an SUPI.

Optionally, the fifth determine location request may carry an identifier of the mobile base station relay accessed by the UE 1 and an identifier of another accessed cell. The identifier of the mobile base station relay is an identifier, for example, a cell global identifier (cell global identifier), of the mobile base station relay when the mobile base station relay is used as a base station.

Optionally, the fifth determine location request may further carry the scheduled positioning information.

S 1203: The LMF 1 obtains target location time.

Specifically, for S1203, refer to the related descriptions in S411. Details are not described herein again.

S 1204: The LMF 1 initiates positioning of the UE 1.

For example, the LMF 1 may send the target location time to the UE 1. The target location time may be carried in a downlink positioning message or an LCS period-triggered invoke request message. The UE 1 may perform cell measurement based on the target location time. For details, refer to the related descriptions of performing cell measurement by the UE 2 in S415. Therefore, positioning measurement data of the UE 1 is obtained, and the positioning measurement data of the UE 1 is sent to the LMF 1. It should be understood that the UE 1 may obtain the positioning measurement data of the UE 1 based on the target location time. The positioning measurement data of the UE 1 may include positioning measurement data between the UE 1 and the mobile base station relay obtained through measurement and positioning measurement data between the UE 1 and the another accessed cell obtained through measurement.

The positioning measurement data between the UE 1 and the mobile base station relay obtained through measurement may include a cell identifier (for example, a cell global identifier) of the mobile base station relay when the mobile base station relay is used as the base station, a downlink reference signal received power of a base station of a cell corresponding to the mobile base station relay, radio wave or PRS transmission time between a first terminal device and the mobile base station relay, and a difference of signal round-trip time between the first terminal device and base stations of cells corresponding to the mobile base station relay.

S1205: The LMF 1 sends a location service request to a GMLC 3. Correspondingly, the GMLC 3 receives the location service request from the LMF 1.

The location service request carries the target location time and an identifier of the mobile base station relay. The identifier of the mobile base station relay may be an identifier, for example, an SUPI or a GPSI, of the mobile base station relay when the mobile base station relay is used as a terminal.

S1206: The GMLC 3 sends a third provide location request to an AMF 3. Correspondingly, the AMF 3 receives the third provide location request from the GMLC 3.

The third provide location request is used to request the AMF 3 to provide location information of the mobile base station relay. The third provide location request carries the target location time and an identifier of the mobile base station relay.

S1205 and S1206 may be replaced with the following: The LMF 1 sends a location service request to the AMF 3, where the location service request may carry the target location time and an identifier of the mobile base station relay. The identifier of the mobile base station relay may be an identifier, for example, an SUPI or a GPSI, of the mobile base station relay when the mobile base station relay is used as a terminal. The LMF 1 may obtain an identifier of the AMF 3 from a UDM based on the identifier of the mobile base station relay.

S1207: The AMF 3 sends a sixth determine location request to an LMF 3. Correspondingly, the LMF 3 receives the sixth determine location request from the AMF 3.

The sixth determine location request is used to request the LMF 3 to determine the location information of the mobile base station relay. The sixth determine location request carries the target location time and the identifier of the mobile base station relay.

S1208: The LMF 3 initiates positioning of the mobile base station relay.

For example, the LMF 3 sends the target location time to the mobile base station relay, and the mobile base station relay performs cell measurement based on the target location time. For a specific process, refer to the related descriptions of performing cell measurement by the UE 2 in S415. Details are not described again. The mobile base station relay sends obtained positioning measurement data of the mobile base station relay to the LMF 3, and the LMF 3 performs calculation based on the positioning measurement data of the mobile base station relay, to obtain the location information of the mobile base station relay.

S1209: The LMF 3 sends a sixth determine location response to the AMF 3. Correspondingly, the AMF 3 receives the sixth determine location response from the LMF 3.

The sixth determine location response carries the location information of the mobile base station relay.

S1210: The AMF 3 sends the location information of the mobile base station relay to the LMF 1. Correspondingly, the LMF 1 receives the location information of the mobile base station relay from the AMF 3.

The location information of the mobile base station relay may be carried in a location service response for sending.

It should be noted that on an execution sequence between S1204 and S1205 to S1210 is not limited. For example, S1204 may be performed before S1205 to S1210, may be performed after S1205 to S1210, or may be performed simultaneously.

S1211: The LMF 1 determines location information of the UE 1 based on the positioning measurement data of the UE 1 and the location information of the mobile base station relay.

For example, the LMF 1 performs calculation based on the positioning measurement data of the UE 1 obtained in S1204 and the location information of the mobile base station relay obtained in S1208, to obtain the location information of the UE 1.

It should be noted that the positioning measurement data of the UE 1 may be reported by a measured cell and the mobile base station relay, or may be reported by the UE 1. It should be understood that the positioning measurement data of the UE 1 includes the positioning measurement data between the UE 1 and the mobile base station relay, and with reference to the location information of the mobile base station relay, the LMF 1 may further calculate the location information of the UE 1.

FIG. 12 shows another method for obtaining location information according to an embodiment of this application. In a scenario in which a terminal device accesses a mobile base station relay (mobile base station relay), a process of positioning a UE that accesses the mobile base station relay is implemented with reference to a 5G network element. The following describes an overall procedure of the method for obtaining location information with reference to FIG. 11.

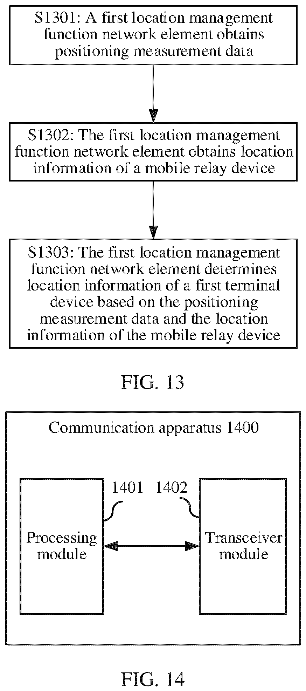

For example, FIG. 13 is a schematic flowchart 8 of a method for obtaining location information according to an embodiment of this application. A first location management function network element is used as an execution body for description. The first location management function network element may be the LMF 1, a first terminal device may be the UE 1, and a mobile relay device may be the mobile base station relay.

As shown in FIG. 13, the method for obtaining location information may include the following steps.

S1301: The first location management function network element obtains positioning measurement data.

The positioning measurement data is obtained based on target location time, and the target location time is obtained by the first location management function. For example, the first location management function network element may receive scheduled positioning information from a location server. The scheduled positioning information may include one or more of scheduled location time, a time interval, or response time. Further, the first location management function network element sends the target location time to the first terminal device.

In a possible design solution, the first location management function network element may receive the target location time from the first terminal device, and the first terminal device may also determine the target location time based on the scheduled positioning information.

Further, after the first terminal device determines the target location time, the first terminal device performs positioning measurement with the mobile relay device and/or one or more access network devices based on the target location time, to obtain positioning measurement data, so that the first location management function network element may obtain the positioning measurement data from the first terminal device. It should be understood that in this case, the first terminal device obtains the positioning measurement data based on the target location time.

The positioning measurement data may include positioning measurement data between the first terminal device and the mobile relay device. Optionally, the positioning measurement data may further include positioning measurement data between the first terminal device and the one or more access network devices. The one or more access network devices may be configured to be accessed by the first terminal device. For example, the positioning measurement data between the first terminal device and the mobile relay device may include a cell identifier (for example, a cell global identifier) of the mobile relay device when the mobile relay device is used as a base station, a downlink reference signal received power of a base station of a cell corresponding to the mobile relay device, radio wave or PRS transmission time between the first terminal device and the mobile relay device, and a difference of signal round-trip time between the first terminal device and base stations of cells corresponding to the mobile relay device.

In a possible design solution, the positioning measurement data may be reported by the mobile relay device and/or the one or more access network devices, or reported by the first terminal device and/or the mobile relay device. This is not limited herein.

In addition, for a specific implementation of S1301, refer to the related descriptions in S1201 to S1204. Details are not described herein again.

S1302: The first location management function network element obtains location information of the mobile relay device.

The location information of the mobile relay device is also determined based on the target location time.

For example, the first location management function network element may send the target location time to a second gateway mobile location center. The second gateway mobile location center is configured to serve the mobile relay device, and the second gateway mobile location center may be the GMLC 3. Further, the GMLC 3 sends the target location time to the mobile relay device through an AMF 3 and an LMF 3. Alternatively, the first location management function network element may send the target location time to a second mobility management function network element. The second mobility management function network element is configured to serve the mobile relay device, and the second mobility management function network element may be the AMF 3. Further, the AMF 3 may send the target location time to the mobile relay device through an LMF 3.

Further, the mobile relay device may perform, for example, PRS measurement with a surrounding cell or a terminal device based on the target location time, to obtain positioning measurement data of the mobile relay device, so as to send the positioning measurement data of the mobile relay device to a third location management function network element. The third location management function network element is configured to serve the mobile relay device and may be the LMF 3. In this case, the third location management function network element performs calculation based on the positioning measurement data of the mobile relay device, to obtain the location information of the mobile relay device.

In addition, for a specific implementation of S1302, refer to the related descriptions in S1205 to S1208. Details are not described herein again.

S1303: The first location management function network element determines location information of the first terminal device based on the positioning measurement data and the location information of the mobile relay device.

For example, the first location management function network element may receive the location information of the mobile relay device from the third location management function network element and receive the positioning measurement data from the first terminal device, and then perform calculation based on the positioning measurement data and the location information of the mobile relay device, to obtain the location information of the first terminal device. For a specific implementation of S 1303, refer to the related descriptions in S1209 to S1211. Details are not described herein again.

Based on the methods for obtaining location information shown in FIG. 12 and FIG. 13, in a scenario in which the terminal device accesses the mobile relay device, the first location management function network element may also assist in positioning of the first terminal device through the mobile relay device, measure and determine the location information of the mobile relay device and the positioning measurement data of the first terminal device based on the same target location time, and determine the location information of the first terminal device by using the location information of the mobile relay device and the positioning measurement data of the first terminal device that are measured simultaneously or at the same time, so that a problem of inaccurate positioning of a terminal device caused by mobility of the terminal device in this scenario can also be resolved, thereby improving positioning accuracy and accuracy of the terminal device.

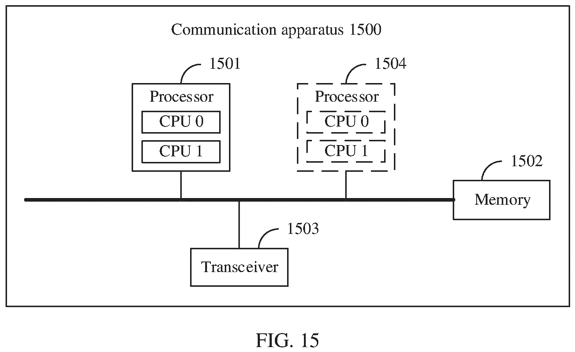

The foregoing describes in detail the method for obtaining location information provided in embodiments of this application with reference to FIG. 4A to FIG. 4C to FIG. 13. The following describes in detail a communication apparatus for performing the method for obtaining location information provided in embodiments of this application with reference to FIG. 14 and FIG. 15.

As shown in FIG. 14, a communication apparatus 1400 includes: a processing module 1401 and a transceiver module 1402. The processing module 1401 may be configured to implement a processing function of any device or network element in the foregoing method embodiments, and the transceiver module 1402 may be configured to implement a transceiver function of any device or network element in the foregoing method embodiments. For ease of description, FIG. 14 shows only main components of the communication apparatus.

In some embodiments, the communication apparatus 1400 may be used in the system shown in any one of FIG. 1 to FIG. 3, and perform a function of the communication device in the method shown in FIG. 9, for example, perform a function of the LMF 1, the UE 1, or the UE 2 in FIG. 4A to FIG. 4C or FIG. 7, or perform a function of the UE 1 or the UE 2 in FIG. 8.

The processing module 1401 is configured to obtain location information of a second terminal device, where the location information of the second terminal device is determined based on target location time, and the second terminal device is configured to assist in positioning of a first terminal device.

The processing module 1401 is further configured to obtain relative location information between the second terminal device and the first terminal device, where the relative location information is determined based on the target location time.

The processing module 1401 is further configured to determine location information of the first terminal device based on the location information of the second terminal device and the relative location information.

Further, the processing module 1401 is further configured to obtain the target location time.

In a possible design solution, the communication apparatus 1400 may be used in a first location management function network element, and the first location management function network element is configured to serve the first terminal device. The transceiver module 1402 is configured to send the target location time to a first gateway mobile location center, where the first gateway mobile location center is configured to serve the second terminal device, and the target location time is used to determine the location information of the second terminal device; or
the transceiver module 1402 is configured to send the target location time to a first mobility management function network element, where the first mobility management function network element is configured to serve the second terminal device, and the target location time is used to determine the location information of the second terminal device.

Further, the transceiver module 1402 is configured to receive scheduled positioning information from a location server, where the scheduled positioning information includes one or more of the following: scheduled location time, a time interval, or response time.

The processing module 1401 is configured to obtain the target location time based on the scheduled positioning information.

In another possible design solution, the communication apparatus 1400 may be used in the second terminal device. The transceiver module 1402 is configured to send the target location time to a second location management function network element, where the second location management function network element is configured to serve the second terminal device, and the target location time is used to determine the location information of the second terminal device.

Further, the transceiver module 1402 is configured to receive the target location time from the first terminal device, where the target location time is used to determine the relative location information.

In a possible design solution, the transceiver module 1402 is configured to send the target location time to the first terminal device, where the target location time is used to determine the relative location information.

In another possible design solution, the communication apparatus 1400 may be used in the first terminal device. The transceiver module 1402 is configured to send the target location time to the second terminal device, where the target location time is used to determine the relative location information.

Optionally, the transceiver module 1402 may include a receiving module and a sending module (not shown in FIG. 14). The sending module is configured to implement a sending function of the communication apparatus 1400, and the receiving module is configured to implement a receiving function of the communication apparatus 1400.

Optionally, the communication apparatus 1400 may further include a storage module (not shown in FIG. 14), and the storage module stores a program or instructions. When the processing module executes the program or the instructions, the communication apparatus 1400 is enabled to perform a function of the communication device in the method shown in FIG. 9.

It should be noted that the communication apparatus 1400 may be a terminal device or a network device, may be a chip (system) or another part or component disposed in the terminal device or the network device, or may be an apparatus including the terminal device or the network device. This is not limited in this application.

In addition, for technical effects of the communication apparatus 1400, refer to the technical effects of the method shown in any one of FIG. 4A to FIG. 4C or FIG. 7 to FIG. 11. Details are not described herein again.

In some other embodiments, the communication apparatus 1400 may be used in the system shown in any one of FIG. 1 to FIG. 3, and perform a function of the first terminal device in the method shown in FIG. 10. Specifically, a function of the UE 1 in FIG. 4A to FIG. 4C or FIG. 7 and FIG. 8 is performed.

The processing module 1401 is configured to obtain target location time.

The processing module 1401 is further configured to obtain relative location information between a second terminal device and a first terminal device based on the target location time, where the second terminal device is configured to assist in positioning of the first terminal device.

In a possible design solution, the transceiver module 1402 is configured to receive a measurement signal from the second terminal device based on the target location time.

The transceiver module 1402 is further configured to obtain the relative location information between the second terminal device and the first terminal device based on the measurement signal.

Further, the transceiver module 1402 is configured to send a positioning request to the second terminal device at the target location time or before the target location time.

The transceiver module 1402 is further configured to receive the measurement signal from the second terminal device.

In a possible design solution, the transceiver module 1402 is configured to send a measurement signal to the second terminal device based on the target location time.

The processing module 1401 is configured to obtain the relative location information between the second terminal device and the first terminal device based on the measurement signal, or the transceiver module 1402 is configured to receive the relative location information from the second terminal device. The relative location information is determined based on the measurement signal.

Further, the transceiver module 1402 is configured to send the measurement signal to the second terminal device at the target location time or before the target location time.

In a possible design solution, the transceiver module 1402 is configured to receive the target location time from a first location management function network element, where the first location management function network element is configured to serve the first terminal device.

In a possible design solution, the transceiver module 1402 is configured to send the target location time to the second terminal device, where the target location time is used to determine the relative location information.

In a possible design solution, the transceiver module 1402 is configured to send the target location time to the first location management function network element, where the target location time is used to determine location information of the second terminal device.

In a possible design solution, the transceiver module 1402 is configured to receive the location information of the second terminal device from the second terminal device, where the location information of the second terminal device is determined based on the target location time.

The processing module 1401 is configured to determine location information of the first terminal device based on the relative location information and the location information of the second terminal device.

Optionally, the transceiver module 1402 may include a receiving module and a sending module (not shown in FIG. 14). The sending module is configured to implement a sending function of the communication apparatus 1400, and the receiving module is configured to implement a receiving function of the communication apparatus 1400.

Optionally, the communication apparatus 1400 may further include a storage module, and the storage module stores a program or instructions. When the processing module executes the program or the instructions, the communication apparatus 1400 is enabled to perform a function of the first terminal device.

It should be noted that, the communication apparatus 1400 may be a terminal device, may be a chip (system) or another part or component that may be disposed in the terminal device, or may be an apparatus including the terminal device. This is not limited in this application.

In addition, for technical effects of the communication apparatus 1400, refer to the technical effects of the method shown in any one of FIG. 4A to FIG. 4C or FIG. 7 to FIG. 11. Details are not described herein again.

In some other embodiments, the communication apparatus 1400 may be used in the system shown in any one of FIG. 1 to FIG. 3, and perform a function of the second terminal device in the method shown in FIG. 11. Specifically, a function of the UE 2 in FIG. 4A to FIG. 4C or FIG. 7 and FIG. 8 is performed.

The processing module 1401 is configured to obtain target location time.

The transceiver module 1402 is configured to send a measurement signal to a first terminal device based on the target location time; or
the transceiver module 1402 is configured to receive a measurement signal from a first terminal device based on the target location time. A second terminal device is configured to assist in positioning of the first terminal device, and the measurement signal is used to determine relative location information between the second terminal device and the first terminal device.

In a possible design solution, the transceiver module 1402 is further configured to receive the target location time from the first terminal device.

Further, the transceiver module 1402 is configured to send the target location time to a second location management function network element, where the second location management function network element is configured to serve the second terminal device, and the target location time is used to determine location information of the second terminal device.

In a possible design solution, the processing module 1401 is configured to obtain the relative location information.

The transceiver module 1402 is configured to receive the location information of the second terminal device from the second location management function network element, where the location information of the second terminal device is determined based on the target location time.

The processing module 1401 is configured to determine location information of the first terminal device based on the location information of the second terminal device and the relative location information.

The transceiver module 1402 is configured to send the location information of the first terminal device to the first terminal device.

In a possible design solution, the transceiver module 1402 is configured to receive the location information of the second terminal device from the second location management function network element, where the location information of the second terminal device is determined based on the target location time.

The transceiver module 1402 is configured to send the location information of the second terminal device to the first terminal device, where the location information of the second terminal device is used to determine location information of the first terminal device.

Optionally, the transceiver module 1402 may include a receiving module and a sending module (not shown in FIG. 14). The sending module is configured to implement a sending function of the communication apparatus 1400, and the receiving module is configured to implement a receiving function of the communication apparatus 1400.

Optionally, the communication apparatus 1400 may further include a storage module, and the storage module stores a program or instructions. When the processing module executes the program or the instructions, the communication apparatus 1400 is enabled to perform a function of the second terminal device in the method.

It should be noted that, the communication apparatus 1400 may be a terminal device, may be a chip (system) or another part or component that may be disposed in the terminal device, or may be an apparatus including the terminal device. This is not limited in this application.

In addition, for technical effects of the communication apparatus 1400, refer to the technical effects of the method shown in any one of FIG. 4A to FIG. 4C or FIG. 7 to FIG. 11. Details are not described herein again.

In still some other embodiments, the communication apparatus 1400 may be used in the system shown in FIG. 1 to FIG. 3, and perform a function of the first location management function network element in the method shown in FIG. 13.

The processing module 1401 is configured to obtain positioning measurement data, where the positioning measurement data includes positioning measurement data between the first terminal device and a mobile relay device, and the positioning measurement data is obtained based on target location time.

The processing module 1401 is configured to obtain location information of the mobile relay device, where the location information of the mobile relay device is determined based on the target location time.

The processing module 1401 is configured to determine location information of the first terminal device based on the positioning measurement data and the location information of the mobile relay device.

In a possible design solution, the transceiver module 1402 is configured to receive the positioning measurement data between the first terminal device and the mobile relay device from the first terminal device or the mobile relay device.

Further, the processing module 1401 is configured to obtain the target location time.

In a possible design solution, the transceiver module 1402 is configured to receive scheduled positioning information from a location server, where the scheduled positioning information includes one or more of the following: scheduled location time, a time interval, or response time.

The processing module 1401 is configured to obtain the target location time based on the scheduled positioning information.

In a possible design solution, the transceiver module 1402 is configured to send the target location time to the first terminal device, where the target location time is used to determine the positioning measurement data.

In another possible design solution, the transceiver module 1402 is configured to receive the target location time from the first terminal device.

In a possible design solution, the transceiver module 1402 is configured to send the target location time to a second gateway mobile location center, where the second gateway mobile location center is configured to serve the mobile relay device, and the target location time is used to determine the location information of the mobile relay device; or
the transceiver module 1402 is configured to send the target location time to a second mobility management function network element, where the second mobility management function network element is configured to serve the mobile relay device, and the target location time is used to determine the location information of the mobile relay device.

Optionally, the transceiver module 1402 may include a receiving module and a sending module (not shown in FIG. 14). The sending module is configured to implement a sending function of the communication apparatus 1400, and the receiving module is configured to implement a receiving function of the communication apparatus 1400.

Optionally, the communication apparatus 1400 may further include a storage module, and the storage module stores a program or instructions. When the processing module executes the program or the instructions, the communication apparatus 1400 is enabled to perform a function of the first location management function network element in the method shown in FIG. 11.

It should be noted that the communication apparatus 1400 may be a network device, may be a chip (system) or another part or component that may be disposed in the network device, or may be an apparatus including the network device. This is not limited in this application.

All related content of the steps in the foregoing method embodiments may be cited in function descriptions of the corresponding functional modules. Details are not described herein again.

In addition, for technical effects of the communication apparatus 1400, refer to the technical effects of the method shown in FIG. 11. Details are not described herein again.

For example, FIG. 15 is a diagram 2 of a structure of a communication apparatus according to an embodiment of this application. The communication apparatus may be a terminal device or a network device, or may be a chip (system) or another part or component that may be disposed in the terminal device or the network device. As shown in FIG. 15, the communication apparatus 1500 may include a processor 1501. Optionally, the communication apparatus 1500 may further include a memory 1502 and/or a transceiver 1503. The processor 1501, the memory 1502, and the transceiver 1503 are coupled to each other, for example, may be connected to each other through a communication bus.

The following describes components of the communication apparatus 1500 in detail with reference to FIG. 15.

The processor 1501 is a control center of the communication apparatus 1500, and may be a processor, or may be a generic term of a plurality of processing elements. For example, the processor 1501 is one or more central processing units (central processing units, CPUs), may be an application-specific integrated circuit (application-specific integrated circuit, ASIC), or may be one or more integrated circuits configured to implement embodiments of this application, for example, one or more digital signal processors (digital signal processors, DSPs), or one or more field programmable gate arrays (field programmable gate arrays, FPGAs).

Optionally, the processor 1501 may execute various functions of the communication apparatus 1500 by running or executing a software program stored in the memory 1502 and invoking data stored in the memory 1502.

In a specific implementation, in an embodiment, the processor 1501 may include one or more CPUs, for example, a CPU 0 and a CPU 1 shown in FIG. 15.

In a specific implementation, in an embodiment, the communication apparatus 1500 may alternatively include a plurality of processors, for example, the processor 1501 and a processor 1504 shown in FIG. 2. Each of the processors may be a single-core processor (single-CPU), or may be a multi-core processor (multi-CPU). The processor herein may be one or more devices, circuits, and/or processing cores configured to process data (for example, computer program instructions).

The memory 1502 is configured to store a software program for performing the solutions of this application, and the processor 1501 controls execution of the software program. For a specific implementation, refer to the foregoing method embodiment. Details are not described herein again.

Optionally, the memory 1502 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), another optical disk storage, an optical disc storage (including a compact disc, a laser disc, an optical disc, a digital versatile disc, a Blu-ray disc, or the like), a magnetic disk storage medium, another magnetic storage device, or any other medium that can be used to carry or store expected program code in a form of instructions or a data structure and that is accessible by a computer. However, this is not limited thereto. The memory 1502 may be integrated with the processor 1501, or may exist independently, and is coupled to the processor 1501 through an interface circuit (not shown in FIG. 15) of the communication apparatus 1500. This is not specifically limited in embodiments of this application.

The transceiver 1503 is configured to communicate with another communication apparatus. For example, the communication apparatus 1500 is a terminal device, and the transceiver 1503 may be configured to communicate with a network device or communicate with another terminal device. For another example, the communication apparatus 1500 is a network device, and the transceiver 1503 may be configured to communicate with a terminal device or communicate with another network device.

Optionally, the transceiver 1503 may include a receiver and a transmitter (which are not separately shown in FIG. 15). The receiver is configured to implement a receiving function, and the transmitter is configured to implement a sending function.

Optionally, the transceiver 1503 may be integrated with the processor 1501, or may exist independently, and is coupled to the processor 1501 through an interface circuit (not shown in FIG. 15) of the communication apparatus 1500. This is not specifically limited in embodiments of this application.

It should be noted that, the structure of the communication apparatus 1500 shown in FIG. 15 does not constitute a limitation on the communication apparatus. An actual communication apparatus may include more or fewer components than those shown in the figure, combine some components, or have different component arrangements.

In addition, for technical effects of the communication apparatus 1500, refer to the technical effects of the method for obtaining location information in the foregoing method embodiments. Details are not described herein again.

Embodiments of this application provide a communication system. The communication system includes a first location management function network element and a second location management function network element. Optionally, the communication system further includes a first terminal device and a second terminal device.

Embodiments of this application provide a computer-readable storage medium. The computer-readable storage medium stores computer instructions. When the computer instructions are run on a computer, the computer is enabled to perform the method shown in any one of FIG. 4A to FIG. 4C or FIG. 7 to FIG. 13.

Embodiments of this application provide a computer program product including instructions. The computer program product includes a computer program or instructions. When the computer program or instructions are run on a computer, the computer is enabled to perform the method shown in any one of FIG. 4A to FIG. 4C or FIG. 7 to FIG. 13.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, including one or more usable medium sets. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for obtaining location information, wherein the method comprises:
obtaining location information of a second terminal device, wherein the location information of the second terminal device is determined based on target location time, and the second terminal device is configured to assist in positioning of a first terminal device;
obtaining relative location information between the second terminal device and the first terminal device, wherein the relative location information is determined based on the target location time; and
determining location information of the first terminal device based on the location information of the second terminal device and the relative location information.

2. The method according to claim 1, wherein the method further comprises:
obtaining the target location time.

3. The method according to claim 1 or 2, wherein the method is applied to a first location management function network element, and the first location management function network element is configured to serve the first terminal device; and the method further comprises:
sending a location service request to a first gateway mobile location center, wherein the location service request is used to request to obtain the location information of the second terminal device, the location service request comprises the target location time, and the target location time is used to determine the location information of the second terminal device; or
sending the target location time to a first mobility management function network element, wherein the first mobility management function network element is configured to serve the second terminal device, and the target location time is used to determine the location information of the second terminal device.

4. The method according to claim 2 or 3, wherein the obtaining the target location time comprises:
receiving scheduled positioning information from a location server, wherein the scheduled positioning information comprises one or more of the following: scheduled location time, a time interval, or response time; and
obtaining the target location time based on the scheduled positioning information.

5. The method according to claim 1 or 2, wherein the method is applied to the second terminal device, and the method further comprises:
sending the target location time to a second location management function network element, wherein the second location management function network element is configured to serve the second terminal device, and the target location time is used to determine the location information of the second terminal device.

6. The method according to claim 3 or 5, wherein the obtaining the target location time comprises:
receiving the target location time from the first terminal device, wherein the target location time is used to determine the relative location information.

7. The method according to any one of claims 3 to 6, wherein the method further comprises:
sending the target location time to the first terminal device, wherein the target location time is used to determine the relative location information.

8. The method according to claim 1 or 2, wherein the method is applied to the first terminal device, and the method further comprises:
sending the target location time to the second terminal device, wherein the target location time is used to determine the relative location information or the location information of the second terminal device.

9. A method for obtaining location information, wherein the method comprises:
obtaining, by a first terminal device, target location time; and
obtaining, by the first terminal device, relative location information between a second terminal device and the first terminal device based on the target location time, wherein the second terminal device is configured to assist in positioning of the first terminal device.

10. The method according to claim 9, wherein the obtaining, by the first terminal device, relative location information based on the target location time comprises:
receiving, by the first terminal device, a measurement signal from the second terminal device based on the target location time; and
obtaining, by the first terminal device, the relative location information between the second terminal device and the first terminal device based on the measurement signal.

11. The method according to claim 10, wherein the receiving, by the first terminal device, a measurement signal from the second terminal device based on the target location time comprises:
sending, by the first terminal device, a positioning request to the second terminal device at the target location time or before the target location time; and
receiving, by the first terminal device, the measurement signal from the second terminal device.

12. The method according to claim 9, wherein the obtaining, by the first terminal device, relative location information based on the target location time comprises:
sending, by the first terminal device, a measurement signal to the second terminal device based on the target location time; and
obtaining, by the first terminal device, the relative location information between the second terminal device and the first terminal device based on the measurement signal; or
receiving, by the first terminal device, the relative location information from the second terminal device, wherein
the relative location information is determined based on the measurement signal.

13. The method according to claim 12, wherein the sending, by the first terminal device, a measurement signal to the second terminal device based on the target location time comprises:
sending, by the first terminal device, the measurement signal to the second terminal device at the target location time or before the target location time.

14. The method according to any one of claims 9 to 13, wherein the obtaining, by a first terminal device, target location time comprises:
receiving, by the first terminal device, the target location time from a first location management function network element, wherein the first location management function network element is configured to serve the first terminal device.

15. The method according to any one of claims 9 to 14, wherein the method further comprises:
sending, by the first terminal device, the target location time to the second terminal device, wherein the target location time is used to determine the relative location information.

16. The method according to any one of claims 9 to 15, wherein the method further comprises:
sending, by the first terminal device, the target location time to the first location management function network element, wherein the target location time is used to determine location information of the second terminal device.

17. The method according to any one of claims 9 to 16, wherein the method further comprises:
receiving, by the first terminal device, the location information of the second terminal device from the second terminal device, wherein the location information of the second terminal device is determined based on the target location time; and
determining, by the first terminal device, location information of the first terminal device based on the relative location information and the location information of the second terminal device.

18. A method for obtaining location information, wherein the method comprises:
obtaining, by a second terminal device, target location time; and
sending, by the second terminal device, a measurement signal to a first terminal device based on the target location time; or
receiving, by the second terminal device, a measurement signal from the first terminal device based on the target location time, wherein
the second terminal device is configured to assist in positioning of the first terminal device, and the measurement signal is used to determine relative location information between the second terminal device and the first terminal device.

19. The method according to claim 18, wherein the obtaining, by a second terminal device, target location time comprises:
receiving, by the second terminal device, the target location time from the first terminal device.

20. The method according to claim 18 or 19, wherein the method further comprises:
sending, by the second terminal device, the target location time to a second location management function network element, wherein the second location management function network element is configured to serve the second terminal device, and the target location time is used to determine location information of the second terminal device.

21. The method according to any one of claims 18 to 20, wherein the method further comprises:
obtaining, by the second terminal device, the relative location information;
receiving, by the second terminal device, the location information of the second terminal device from the second location management function network element, wherein the location information of the second terminal device is determined based on the target location time;
determining, by the second terminal device, location information of the first terminal device based on the location information of the second terminal device and the relative location information; and
sending, by the second terminal device, the location information of the first terminal device to the first terminal device.

22. The method according to any one of claims 18 to 20, wherein the method further comprises:
receiving, by the second terminal device, the location information of the second terminal device from the second location management function network element, wherein the location information of the second terminal device is determined based on the target location time; and
sending, by the second terminal device, the location information of the second terminal device to the first terminal device, wherein the location information of the second terminal device is used to determine location information of the first terminal device.

23. A method for obtaining location information, applied to a first location management function network element, wherein the first location management function network element is configured to serve a first terminal device, and the method comprises:
receiving positioning measurement data from the first terminal device, wherein the positioning measurement data comprises positioning measurement data between the first terminal device and a mobile base station relay, and the positioning measurement data is obtained by the first terminal device based on target location time;
obtaining location information of the mobile base station relay, wherein the location information of the mobile base station relay is determined based on the target location time; and
determining location information of the first terminal device based on the positioning measurement data and the location information of the mobile base station relay.

24. The method according to claim 23, wherein the method further comprises:
obtaining the target location time.

25. The method according to claim 24, wherein the obtaining the target location time comprises:
receiving scheduled positioning information from a location server, wherein the scheduled positioning information comprises one or more of the following: scheduled location time, a time interval, or response time; and
obtaining the target location time based on the scheduled positioning information.

26. The method according to any one of claims 23 to 25, wherein the method further comprises:
sending the target location time to the first terminal device, wherein the target location time is used to determine the positioning measurement data.

27. The method according to claim 24, wherein the obtaining the target location time comprises:
receiving the target location time from the first terminal device.

28. The method according to any one of claims 23 to 27, wherein the method further comprises:
sending a location service request to a second gateway mobile location center, wherein the location service request is used to request to obtain the location information of the mobile base station relay, the location service request comprises the target location time, and the target location time is used to determine the location information of the mobile base station relay; or
sending the target location time to a second mobility management function network element, wherein the second mobility management function network element is configured to serve the mobile base station relay, and the target location time is used to determine the location information of the mobile base station relay.

29. A communication apparatus, comprising: a processing module and a transceiver module, wherein
the processing module is configured to perform a processing function of the method according to any one of claims 1 to 28; and
the transceiver module is configured to perform a transceiver function of the method according to any one of claims 1 to 28.

30. A communication apparatus, comprising: a processor, wherein the processor is coupled to a memory;
the memory is configured to store a computer program; and
the processor is configured to execute the computer program stored in the memory, to enable the communication apparatus to perform the method according to any one of claims 1 to 28.

31. A communication system, wherein the communication system comprises: at least one communication apparatus configured to perform the method according to any one of claims 1 to 28.

32. A computer-readable storage medium, wherein the computer-readable storage medium stores a computer program or instructions, and when the computer program or the instructions are run on a computer, the computer is enabled to perform the method according to any one of claims 1 to 28.

33. A computer program product, wherein the computer program product comprises a computer program or instructions, and when the computer program or the instructions are run on a computer, the computer is enabled to perform the method according to any one of claims 1 to 28.
